(19)

**Europäisches Patentamt**
**European Patent Office**
**Office européen des brevets**

(11) **EP 1 668 515 B1**

(12) **EUROPÄISCHE PATENTSCHRIFT**

(45) Veröffentlichungstag und Bekanntmachung des Hinweises auf die Patenterteilung:
**05.10.2011 Patentblatt 2011/40**

(21) Anmeldenummer: **04741411.5**

(22) Anmeldetag: **12.08.2004**

(51) Int Cl.:
**G06F 12/14** (2006.01)

(86) Internationale Anmeldenummer:
**PCT/EP2004/009054**

(87) Internationale Veröffentlichungsnummer:
**WO 2005/043396 (12.05.2005 Gazette 2005/19)**

(54) **WORTINDIVIDUELLE SCHLÜSSELERZEUGUNG**

WORD-INDIVIDUAL KEY GENERATION

PRODUCTION D'UNE CLE INDIVIDUELLE A CHAQUE MOT

(84) Benannte Vertragsstaaten:
**DE**

(30) Priorität: **30.09.2003 DE 10345454**

(43) Veröffentlichungstag der Anmeldung:
**14.06.2006 Patentblatt 2006/24**

(73) Patentinhaber: **Infineon Technologies AG**
**85579 Neubiberg (DE)**

(72) Erfinder:
- **ELBE, Astrid**
  **81243 München (DE)**
- **GAMMEL, Berndt**
  **85570 Markt Schwaben (DE)**
- **GÖTTFERT, Rainer**
  **82024 Taufkirchen (DE)**
- **SONNEKALB, Steffen**
  **82024 Taufkirchen (DE)**

(74) Vertreter: **Schenk, Markus et al**
**Schoppe, Zimmermann, Stöckeler & Zinkler**
**Patentanwälte**
**Postfach 246**
**82043 Pullach bei München (DE)**

(56) Entgegenhaltungen:
WO-A-00/55736    GB-A- 2 264 373
US-A- 4 319 079    US-A- 5 915 025
US-A1- 2003 105 967    US-B1- 6 345 359

- ITOH K ET AL: "DPA countermeasure based on the "masking method"" INFORMATION SECURITY AND CRYPTOLOGY - ICISC 2001. 4TH INTERNATIONAL CONFERENCE. PROCEEDINGS (LECTURE NOTES IN COMPUTER SCIENCE VOL.2288) SPRINGER-VERLAG BERLIN, GERMANY, Dezember 2001 (2001-12), Seiten 440-456, XP002322028 ISBN: 3-540-43319-8
- LABBE A ET AL: "DES-SRAM IP-core: a SRAM embedding DES feature" SOC CONFERENCE, 2003. PROCEEDINGS. IEEE INTERNATIONAL [SYSTEMS-ON-CHIP] 17-20 SEPT. 2003, PISCATAWAY, NJ, USA,IEEE, 17. September 2003 (2003-09-17), Seiten 11-14, XP010665813 ISBN: 0-7803-8182-3
- PANATO A ET AL: "A low device occupation IP to implement Rijndael algorithm" DESIGN, AUTOMATION AND TEST IN EUROPE CONFERENCE AND EXHIBITION, 2003 MUNICH, GERMANY 3-7 MARCH 2003, LOS ALAMITOS, CA, USA,IEEE COMPUT. SOC, US, 3. März 2003 (2003-03-03), Seiten 20-25, XP010674193 ISBN: 0-7695-1870-2

EP 1 668 515 B1

**Beschreibung**

Die vorliegende Erfindung bezieht sich auf den Schutz von Speicherinhalten durch Verschlüsselung im allgemeinen und insbesondere auf die Erzeugung einheitenindividueller Schlüssel zum Zugreifen auf die adressierbaren Einheiten eines Speichers.

Zum Schutz gegen unberechtigtes Ausspähen von gespeicherten Informationen werden in verschiedenen Anwendungen die Speicherinhalte des Speichers verschlüsselt. Im Bereich des bargeldlosen Zahlungsverkehrs beispielsweise werden auf Chipkarten gespeicherte Geldbeträge verschlüsselt gespeichert, um sie vor unberechtigtem Ausspähen zu schützen, oder vor Manipulationen, wie z.B. unberechtigten Betragsveränderungen.

An die in einem Speicher gespeicherten verschlüsselten Informationen, d.h. den Klartext, gelangt ein Unberechtigter beispielsweise durch statistische Analyse des auf dem Speicher gespeicherten Chiffrats. Diese statistische Analyse umfasst beispielsweise eine Analyse der Auftretenswahrscheinlichkeit bestimmter Chiffrat-Datenblöcke oder dergleichen. Um diese statistischen Analysen zu erschweren, ist es wünschenswert, dass gleiche Klartexte, die sich in verschlüsselter Form an unterschiedlichen Speicherpositionen des Speichers befinden, dort nicht in Form identischer Chiffretexte vorliegen.

Eine Möglichkeit, die Verschlüsselung von Klartexten an unterschiedlichen Speicherpositionen in den unterschiedlichen Chiffretexten sicherzustellen, besteht darin, zur Verschlüsselung das sogenannte Cipher-Block-Chaining-Verfahren zu verwenden, d.h. das Betreiben einer Blockchiffre im CBC-Modus, wie er beispielsweise im Handbook of Applied Cryptography, CRC Press, NY, 1997, S. 230, beschrieben ist. Im CBC-Modus wird zur Verschlüsselung eines Klartext-Datenblocks immer das Chiffrat des vorhergehenden Klartext-Datenblocks herangezogen, wie z.B. des Klartext-Datenblocks mit um 1 niedrigerer oder um 1 höherer Adresse in dem Speicher. Der CBC-Modus hat den Nachteil, dass ein einzelnes isoliertes Datum in dem Speicher nur entschlüsselt werden kann, wenn die gesamte Kette der sequentiellen Daten entschlüsselt wird. Folglich ist kein direkter Zugriff auf Daten innerhalb der CBC-Kette möglicht. Das Durchgehen der Chiffre-Kette kostet wiederum kostbare Rechenzeit und verbraucht unnötig viel Strom, was insbesondere bei Smartcards von Nachteil ist, die in batteriebetriebenen Geräten verwendet werden, wie z.B. Handys, oder bei Chipkarten, bei denen die Kunden der Chipkartenherausgeber möglichst kurze Transaktionszeiten an den Terminals verlangen.

Eine weitere Möglichkeit sicherzustellen, dass gleiche Klartexte, die sich an unterschiedlichen Speicherpositionen befinden, in unterschiedliche Chiffretexte verschlüsselt werden, besteht in der Generierung adressabhängiger Schlüssel zur Verschlüsselung der Klartexte. Die Verwendung adressabhängiger Schlüssel macht sich den Umstand zunutze, dass einem zu speichernden, zu verschlüsselnden Datum ein fester Speicherplatz und somit eine fest zugeordnete Adresse zugeordnet ist, und dass das verschlüsselte, gespeicherte Datum genau an dieser fest zugeordneten Adresse gespeichert ist und bleibt, bis es wieder anhand dieser Adresse ausgelesen wird. Aus einem vorhandenen geheimen Generalschlüssel und der Adressinformation für eine Speicherposition bzw. eine individuell adressierbare Einheit kann nun ein individueller Schlüssel generiert werden, mit welchem dann das betreffende Datum bei einem Schreibevorgang verschlüsselt und bei einem Lesevorgang entschlüsselt werden kann. Die adressabhängige Generierung hat den Nachteil, dass der Aufwand für die Schlüsselgenerierung in etwa so groß ist, wie der Aufwand für die Verschlüsselung bzw. Entschlüsselung selbst, da für jeden adressierbaren Speicherplatz bzw. für jedes adressierbare Speicherwort eine Schlüsselgenerierung durchgeführt werden muss, die dafür sorgt, dass die Abbildung von Adresse auf zugehörige adressabhängige Schlüssel für einen Unbefugten möglichst undurchsichtig ist. Schlüsselgenerierung auf Speicherwortgranularität zieht folglich ebenfalls ein hohes Maß an Performancereduzierung mit sich, was die Kundenfreundlichkeit bei beispielsweise Chipkarten verringern kann.

Eine Möglichkeit, das Sicherheitsdefizit durch Weglassen der Adressabhängigkeit bei der Verschlüsselung gespeicherter Speicherinhalte auszugleichen, bestünde darin, die Blockgrößen bei der Verschlüsselung zu vergrößern, da dies die Anzahl möglicher Klartexte für ein Chiffrat erhöht. Damit verbunden ist jedoch ein erhöhter Aufwand auf Seiten der Verschlüsselungs- und Entschlüsselungshardware, der diese Option für Massenware wie Chipkarten untragbar macht.

In der US 5,915,025 wird eine Datenverarbeitungsvorrichtung mit Software-Schutzfunktionen beschrieben, bei der die Daten adressabhängig verschlüsselt werden. Insbesondere wird dazu jeder Speicherseite jeweils eine Schlüsselgruppe zugeordnet, wobei jede Schlüsselgruppe mehrere Schlüssel enthält, von denen jeder einem bestimmten Seitenversatz innerhalb der jeweiligen Seite entspricht. Die Blöcke innerhalb der Seite werden folglich unter Verwendung der individuellen Schlüssel in der jeweiligen Schlüsselgruppe ver- bzw. entschlüsselt.

In XP010665813 wird eine spezielle Implementierung eines DES-Algorithmus beschrieben, bei dem die Rundenschlüssel aus dem Anfangsschlüssel durch spezielle Verdrahtung in nur einem Taktzyklus berechnet werden.

Die Aufgabe der vorliegenden Erfindung besteht darin, ein Verfahren und eine Vorrichtung zur Erzeugung individueller Schlüssel zu schaffen, die einen Zugriff auf einen Speicher auf der Basis dieser individuellen Schlüssel ermöglichen und dabei den Gesamtaufwand zum Zugriff zu verringern.

Diese Aufgabe wird durch eine Vorrichtung gemäß Anspruch 1 oder 13 und ein Verfahren gemäß Anspruch 12 oder 14 gelöst.

Die Erkenntnis der vorliegenden Erfindung besteht darin, dass die in vielen Systemen bereits vorhandene Gruppierung der individuell adressierbaren Einheiten eines Speichers zu Gruppen bzw. Seiten verwendet werden kann, um die Komplexität der adressabhängigen Schlüsselgenerierung bei nur geringfügiger Verringerung an der Sicherheit deutlich zu verkleinern, wenn zunächst ein Seitenvorschlüssel auf der Basis einer Seitenadresse berechnet wird und dann auf der Basis des Seitenvorschlüssels und der Wortadresse erst der individuelle Schlüssel ermittelt wird. Hierdurch kann die adressabhängige Schlüsselgenerierung in einen kryptographisch anspruchsvollen relativ aufwendigen Prozess, der aber nur selten durchgeführt werden muss, nämlich die Seitenvorschlüsselberechnung, und in einen schnellen, nahezu aufwandslosen Schritt, der für jedes Wort bzw. jede individuell adressierbare Einheit ausgeführt werden muss, nämlich die Ermittlung des individuellen Schlüssels auf der Basis des Seitenvorschlüssels und der Wortadresse, aufgespalten werden. Der Seitenvorschlüsselberechnungsvorgang kann also derart gewählt werden, dass der Vorgang bei der Implementierung weniger Chipfläche und/oder mehr Verarbeitungslaufzeitdauer aufweist als die Implementierung der Ermittlung des individuellen Schlüssels. Hierdurch kann die Zugriffszeit auf den Speicher verringert werden, da die Seitenadresse ja für alle individuell adressierbaren Einheiten, die zu einer Seite gehören, gleich ist und folglich nicht immer erneut berechnet werden muss. Vielmehr kann die Seitenadresse zwischengespeichert werden, um für diejenigen unter den nachfolgenden Zugriffen auf den Speicher zur Verfügung zu stehen, die sich auf adressierbare Einheiten in der entsprechenden Speicherseite beziehen. Die Speicherung kann beispielsweise in einem Verdrängungsspeicher erfolgen, bei dem ein gewisser Verdrängungsmechanismus verwendet wird, um in demselben beispielsweise die Seitenvorschlüssel für diejenigen Seiten zeitweilig gespeichert bereitzustellen, auf die bzw. deren inbegriffenen Einheiten mit hoher Wahrscheinlichkeit in kürze wieder zugegriffen wird. Dieser Speicher kann, wenn vorhanden, mit einem Cache- oder Daten-Cache-Speicher integriert bzw. kombiniert werden, der ja auf ähnlich Weise dazu da ist, aktuelle Daten für einen schnellen Zugriff bereitzustellen, ohne dass ein Zugriff auf einen langsameren Hintergrundspeicher notwendig ist.

Bevorzugte Ausführungsbeispiele der vorliegenden Erfindung werden nachfolgend Bezug nehmend auf die beiliegenden Zeichnungen näher erläutert. Es zeigen:

Fig. 1    ein Blockschaltbild eines Speichersystems, in welchem eine erfindungsgemäße Schlüsselerzeugung verwendet werden kann, gemäß einem Ausführungsbei- spiel der vorliegenden Erfindung;

Fig. 2a    ein schematisches Blockschaltbild zur Veranschauli- chung des Aufbaus und der Funktionsweise der Schlüsselerzeugungseinrichtung in dem Speichersys- tem von Fig. 1 gemäß einem Ausführungsbeispiel der vorliegenden Erfindung;

Fig. 2b    eine schematische Darstellung des Aufbaus einer Seite aus Wörtern gemäß einem Ausführungsbeispiel der vorliegenden Erfindung;

Fig. 3    ein schematisches Blockschaltbild zur Veranschauli- chung des Aufbaus und der Funktionsweise der Vor- schlüsselberechnungseinrichtung in Fig. 2 gemäß ei- nem Ausführungsbeispiel der vorliegenden Erfindung;

Fig. 4    eine schematische Zeichnung zur Veranschaulichung des Aufbaus und der Funktionsweise der Einrichtung zur Ermittlung des individuellen Schlüssels aus den Seitenvorschlüsseln und der Wortadresse von Fig. 2 gemäß einem Ausführungsbeispiel der vorliegenden Erfindung;

Fig. 5    eine schematische Zeichnung zur Veranschaulichung des Aufbaus und der Funktionsweise der Ermittlungs- einrichtung von Fig. 2 gemäß einem weiteren Ausfüh- rungsbeispiel der vorliegenden Erfindung;

Fig. 6    eine schematische Zeichnung zur Veranschaulichung des Aufbaus und der Funktionsweise der Ermittlungs- einrichtung von Fig. 2 gemäß einem weiteren Ausfüh- rungsbeispiel der vorliegenden Erfindung;

Fig. 7    eine schematische Zeichnung zur Veranschaulichung des Aufbaus und der Funktionsweise der Ermittlungs- einrichtung von Fig. 2 gemäß einem weiteren Ausfüh- rungsbeispiel der vorliegenden Erfindung;

Fig. 8    ein Blockschaltbild eines für die Entschlüsselung zuständigen Teils einer Ver-/Entschlüsselungsein- richtung wie in Fig. 1 gemäß einem Ausführungsbei- spiel der vorliegenden Erfindung;

Fig. 9    ein Blockschaltbild eines für die Verschlüsselung zuständigen Teils einer Ver-/Entschlüsselungsvor- richtung wie in Fig. 1 gemäß einem Ausführungsbei- spiel der vorliegenden Erfindung; und

Fig. 10    ein Blockschaltbild einer Einrichtung zur Berech- nung einer Rundenschlüsselfolge als dem individuel- len Schlüssel aus dem Vorschlüssel gemäß einem wei- teren Ausfüh-

rungsbeispiel der vorliegenden Erfin- dung.

Bevor bezugnehmend auf die Zeichnungen die vorliegende Erfindung anhand von Ausführungsbeispielen näher erläutert wird, wird darauf hingewiesen, dass gleiche Elemente oder ähnliche Elemente in diesen Figuren mit gleichen oder ähnlichen Bezugszeichen versehen sind, und dass eine wiederholte Beschreibung dieser Elemente vermieden wird.

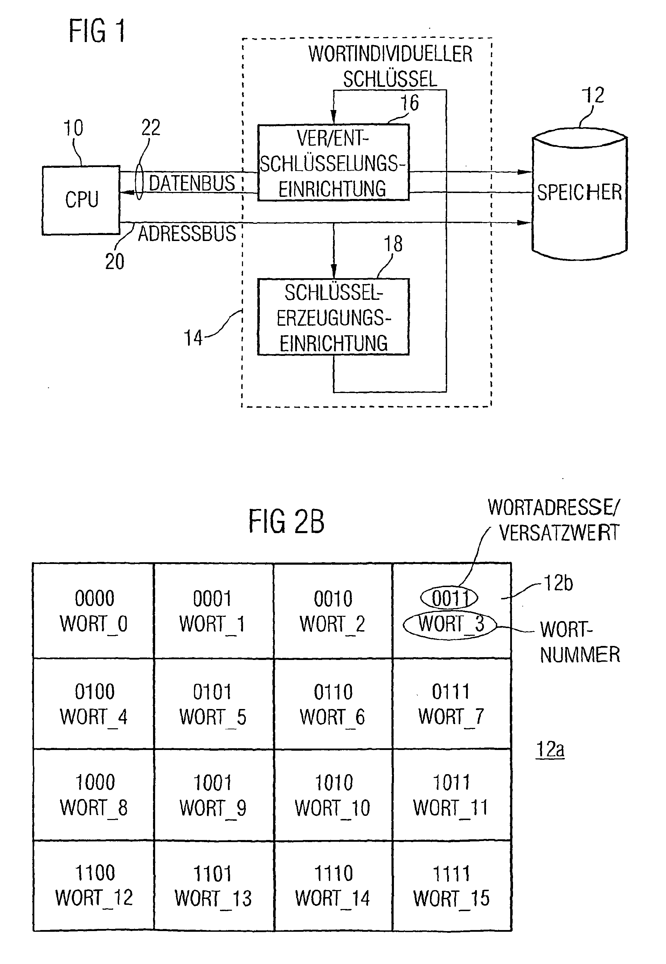

Fig. 1 stellt ein System aus CPU 10, Speicher 12 und einer Speicherzugriffsvorrichtung 14 dar. Das System von Fig. 1 ist beispielsweise Teil eines Kryptocontrollers auf einer Chipkarte. In dem Speicher 12, der beispielsweise Teil eines physikalisch größeren Speichers sein kann, sind geheime Informationen gespeichert, wie z.B. ein Guthaben, ein Masterschlüssel eines chipkartenherausgebenden Institutes oder aber ein geheimer Code eines geheimen Kryptographiealgorithmus.

Die CPU 10 arbeitet ein Programm ab, das beispielsweise ebenfalls in dem Speicher 12 gespeichert sein kann, um vor Zugriffen unberechtigter geschützt zu sein. Einige Befehle in dem Programm erfordern, dass die CPU 10 Speicherinhalte in dem Speicher 12 lädt bzw. ausliest oder Speicherinhalte in dem Speicher 12 durch neue Informationen be- oder überschreibt.

Die Zugriffsvorrichtung 14 ist dazu vorgesehen, sicherzustellen, dass die geheimen Informationen in dem Speicher 12 immer in verschlüsselter Form gespeichert werden, und dass umgekehrt die verschlüsselten Speicherinhalte des Speichers 12 bei Ladevorgängen bzw. bei Auslesen derselben wieder entschlüsselt werden.

Die Zugriffsvorrichtung 14 umfasst eine Ver-/Entschlüsselungseinrichtung 16 sowie eine Schlüsselerzeugungseinrichtung 18. Die Ver-/Entschlüsselungseinrichtung 16 ist dazu vorgesehen, Daten von der CPU 10, die in dem Speicher 12 gespeichert werden sollen, vor ihrer Speicherung zu verschlüsseln, und von dem Speicher 12 ausgegebene, gespeicherte und verschlüsselte Daten vor ihrer Weiterleitung an die CPU 10 zu entschlüsseln. Die Ver-/Entschlüsselungseinrichtung 16 verwendet hierzu einen wortindividuellen Schlüssel, den sie von der Schlüsseleinrichtung 18 erhält.

Genauer ausgedrückt ist die CPU 10 über einen Adressbus 20 mit sowohl einem Adresseingang des Speichers 12 als auch einem Adresseingang der Schlüsselerzeugungseinrichtung 18 verbunden. Die Schlüsselerzeugungseinrichtung 18 gibt an ihrem Ausgang wortindividuelle Schlüssel für die Adressen auf dem Adressbus 20 aus, wobei der Ausgang der Schlüsselerzeugungseinrichtung 18 mit einem Schlüsseleingang der Ver/Entschlüsselungseinrichtung 16 verbunden ist. Über einen Datenbus 22 ist die CPU 10 mit einem Daten-Ein/Ausgang des Speichers 12 verbunden. In den Datenbus 22 ist die Ver/Entschlüsselungseinrichtung 16 geschaltet. Insbesondere ist ein Dateneingang der Ver-/Entschlüsselungseinrichtung 16 mit einem Datenausgang der CPU 10 und ein weiterer Dateneingang der Ver-/Entschlüsselungseinrichtung 16 mit einem Datenausgang des Speichers 12 verbunden, während ein Datenausgang der Ver-/Entschlüsselungseinrichtung 16 mit einem Dateneingang des Speichers 12 und ein weiterer Datenausgang der Ver-/Entschlüsselungseinrichtung 16 mit einem Dateneingang der CPU 10 verbunden ist. Die Ver-/Entschlüsselungseinrichtung 16 bildet also eine Schnittstelle zwischen CPU 10 und Speicher 12 und sorgt dafür, dass auf dem Datenbus 22 zwischen CPU 10 und Ver-/Entschlüsselungseinrichtung 16 die Daten in entschlüsselter Form, d.h. im Klartext, und in dem Teil des Datenbusses 22 zwischen dem Speicher 12 und der Ver-/Entschlüsselungseinrichtung 16 nur in verschlüsselter Form, d.h. als Chiffrat, vorkommen.

Nachdem im Vorhergehenden der Aufbau des Systems von Fig. 1 beschrieben worden ist, wird im Folgenden dessen Funktionsweise beschrieben. Bei der nachfolgenden Beschreibung der Funktionsweise der CPU 10 wird angenommen, dass sich in dem Speicher 12 bereits verschlüsselte Speicherinhalte befinden. Der Speicher 12 ist in kleinste individuell adressierbare Einheiten, im Folgenden als Wörter bezeichnet, gegliedert. Jedem Wort des Speichers 12 ist eine eindeutige Adresse zugeordnet. Wird nun die CPU 10 bei Abarbeitung eines Programms angewiesen einen Ladevorgang durchzuführen, d.h. den verschlüsselten Speicherinhalt an einem individuell adressierbaren Element bzw. ein Wort aus dem Speicher 12 zu laden, so gibt die CPU 10 auf dem Adressbus 20 die entsprechende eindeutige Adresse aus. Der Speicher 12 verwendet die Adresse um auf die entsprechende physikalische Speicherposition zuzugreifen und das dort gespeicherte verschlüsselte Wort auszulesen und auf den Datenbus 22 an die Ver-/Entschlüsselungseinrichtung 16 auszugeben.

Die Schlüsselerzeugungseinrichtung 18 empfängt die von der CPU 10 ausgegebene Adresse ebenfalls. Wie es im Folgenden noch beschrieben werden wird, ermittelt die Schlüsselerzeugungseinrichtung 18 aus der Adresse auf dem Adressbus 20 einen wortindividuellen Schlüssel, den die Ver-/Entschlüsselungseinrichtung 16 benötigt, um den verschlüsselten ausgelesenen Speicherinhalt von dem Speicher 12 entschlüsseln zu können. Die Schlüsselerzeugungseinrichtung 18 gibt den wortindividuellen Schlüssel deshalb an die Ver-/Entschlüsselungseinrichtung 16 aus. Diese entschlüsselt auf der Basis des wortindividuellen Schlüssels den von dem Speicher 12 erhaltenen Speicherinhalt und gibt diesen Speicherinhalt im Klartext an die CPU 10 aus, die den nun entschlüsselten Speicherinhalt je nach Befehl im Klartext verarbeitet, wie z.B. in ein internes Register lädt oder dergleichen.

In dem Fall, dass das auszuführende Programm in der auszuführenden Befehlszeile einen Schreibvorgang anzeigt, gibt die CPU 10 auf dem Adressbus 20 die Adresse aus, die das Wort angibt, in welchem ein durch den Schreibbefehl spezifiziertes Datum gespeichert werden soll. Das zu speichernde Datum gibt die CPU 10 auf dem Datenbus 22 an die Ver-/Entschlüsselungseinrichtung 16 aus. Wie zuvor bei dem Ladevorgang erzeugt die Schlüsselerzeugungseinrichtung 18 aus der Adresse auf dem Adressbus 20 einen wortindividuellen Schlüssel und gibt denselben an die Ver-/Entschlüsselungseinrichtung 16 aus. Diese verwendet den wortindividuellen Schlüssel zur Verschlüsselung des zu speichernden Datums und gibt das Chiffrat an den Speicher 12 aus. Der Speicher 12 speichert das empfangene Chiffrat an der durch die Adresse auf dem Adressbus 20 angegebenen Stelle in dem entsprechenden Wort ab.

Bei der bisherigen Beschreibung wurde noch nicht genau auf die Funktionsweise der Schlüsselerzeugungseinrichtung 18 eingegangen. Wie es die im Folgenden beschriebenen Ausführungsbeispiele für die Schlüsselerzeugungseinrichtung 18 zeigen werden, ist die Schlüsselerzeugungseinrichtung 18 derart ausgebildet, dass sie in der Lage ist, wortindividuelle Schlüssel zur Verschlüsselung der Speicherinhalte bzw. Wörter in dem Speicher 12 zu erzeugen, ohne aber dabei jedes Mal einen in etwa gleich aufwendigen Schlüsselerzeugungsprozess durchzuführen. Dies wird erzielt, indem mehrere Wörter, die ja die kleinsten adressierbaren Dateneinheiten des Speichers 12 darstellen, jeweils zu einer Seite zusammengefasst werden, und dass für eine Seite nur die Seitenadresse, die die Seite unter den Seiten des Speichers 12 spezifiziert, auf komplizierte und aufwendige und damit sichere Weise zur Erzeugung eines Seitenvorschlüssels herangezogen wird, während für die Wörter innerhalb dieser Seite die wortindividuellen Schlüssel auf einfache, weniger kompliziertere Weise auf der Basis des Seitenvorschlüssels erzeugt werden. Lädt dann, wie es häufig vorkommt, die CPU 10 nacheinander die Wörter einer Seite aus, dann ist es nur beim ersten Wort dieser Seite notwendig, die aufwendige Vorschlüsselgenerierung durchzuführen, während für die restlichen Wörter der Seite dann nur noch die weniger aufwendige Herleitung der wortindividuellen Schlüssel auf der Basis dieses Vorschlüssels notwendig ist.

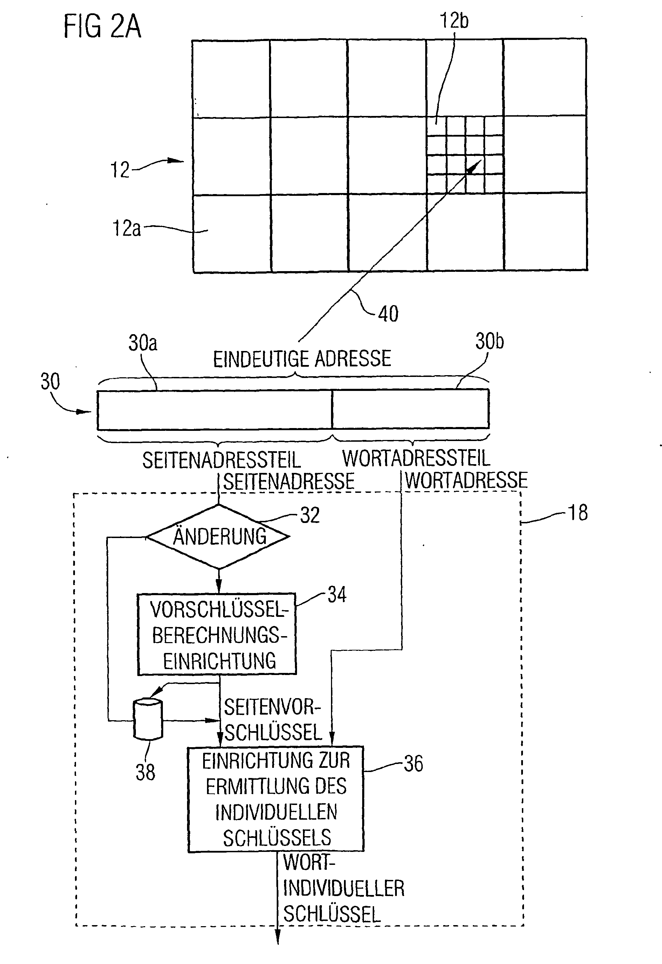

Um die Aufgliederung des Speichers 12 in Seiten und Wörter näher zu veranschaulichen, wird zunächst auf Fig. 2a und 2b Bezug genommen. Fig. 2a zeigt in ihrer oberen Hälfte schematisch als Rechteck dargestellt einen Ausschnitt aus dem Speicher 12. Der in Fig. 2a dargestellte Ausschnitt umfasst exemplarisch 15 Seiten 12a. Jede Seite umfasst wiederum 16 Wörter 12b, wobei dies der Übersichtlichkeit halber in Fig. 2a jedoch nur für eine Seite 12a dargestellt ist. Die Wörter 12b des Speichers 12 sind die kleinsten adressierbaren Dateneinheiten des Speichers 12. Das bedeutet anders ausgedrückt, dass jedem Wort 12b eine eindeutige Adresse zugeordnet ist, durch die es mit dem Speicher 12 verbundenen Einheiten, wie z.B. der CPU 10 von Fig. 1, möglich ist, auf die Speicherinhalte der einzelnen Wörter 12b zuzugreifen. Es wird darauf hingewiesen, dass die räumliche Anordnung der Wörter 12b, wie sie in Fig. 2a dargestellt ist, freilich nur exemplarisch ist, und dass der Speicher 12 auch mehrere übereinanderangeordnete Speicherebenen aufweisen kann, und dass die einzelnen Wörter 12b auch anders zu Seiten zusammengefasst sein können oder anders angeordnet sein können als in Zeilen und Spalten, wie in Fig. 2a gezeigt.

Um nun die Darstellung der nachfolgenden Beschreibung zu vereinfachen, wird im Folgenden davon ausgegangen, dass der Speicher 12 $2^{20}$ Wörter umfasse. Jedes Wort bestehe aus $32 = 2^5$ Bits. Die Speichergröße des Speichers 12 beträgt also nach diesem lediglich illustrativen Beispiel $2^{25}$ Bit = $2^{17}$ x $2^8$ Bit = 128 Kilobyte. Die Einteilung in Seiten wird exemplarisch derart vorgenommen, dass alle Wörter mit Adressen, deren 16 höchstwertige Bits (MSB; MSB = Most Significant Bits) gleich sind, zu einer Seite gehören bzw. zu einer Seite zusammengefasst werden. Die Wortadressen von Wörtern in einer Seite unterscheiden sich folglich lediglich in den verbleibenden vier niedrigstwertigen Bits (LSB; LSB = Least Significant Bits) der Zwanzig-Bit-Wortadresse. Der Speicher 12 enthält folglich $2^{16}$ Seiten.

In Fig. 2a ist bei 30 noch exemplarisch der Aufbau einer eindeutigen Adresse eines Worts 12b gezeigt. Wie bereits erwähnt, wird im Folgenden davon ausgegangen, dass die eindeutige Adresse 30 20 Bit lang ist. Der höherwertigere Teil der eindeutigen Adresse 30 bestehend aus den 16 MSBs und wird als der Seitenadressteil 30a der eindeutigen Adresse bezeichnet. Der Seitenadressteil 30a enthält die sog. Seitenadresse. Der niedrigwertigere Teil 30b der eindeutigen Adresse wird aus den vier LSBs gebildet und stellt den Wortadressteil 30b dar. Der Wortadressteil 30b gibt an, welchem der Wörter in der durch den Seitenadressteil angegebenen Seite 12a die eindeutige Adresse 30 zugeordnet ist.

Dies wird in Fig. 2b näher veranschaulicht, die für eine Seite 12b die Aufteilung in die 16 Wörter 12a dieser Seite 12b veranschaulicht, und in der die Wörter durchnummeriert und mit einer zugehörigen 4-Bit-Wortadresse bzw. mit einem 4-Bit-Versatzwert versehen sind, der für das jeweilige Wort in dem Wortadressteil 30b enthalten sein muss. Durch die Wortadresse bzw. den Versatzwert in dem Wortadressteil 30b wird folglich jedem Wort einer Seite ein fester Platz innerhalb der Seite zugewiesen.

Bezugnehmend auf Fig. 2a wird nun im Folgenden die Schlüsselerzeugungseinrichtung 18 gemäß einem Ausführungsbeispiel der vorliegenden Erfindung näher beschrieben. Die Schlüsselerzeugungseinrichtung 18 umfasst eine Seitenwechselfeststellungseinrichtung 32, eine Vorschlüsselberechnungseinrichtung 34 und eine Einrichtung 36 zur Ermittlung des individuellen Schlüssels. Ferner umfasst die Schlüsselerzeugungseinrichtung 18 einen Speicher, wie z.B. einen flüchtigen Speicher, 38 zur vorübergehenden Speicherung von dem oder den zuletzt verwendeten Seitenvorschlüssel (n), auf deren Funktion und Erzeugung noch im Folgenden näher eingegangen wird.

Die Seitenwechselfeststellungseinrichtung 32 ist dazu vorgesehen, den Seitenadressteil 30a der eindeutigen Adresse 30 auf dem Adressbus 20 zu empfangen und daraufhin zu überprüfen, ob dieselbe eine Seite betrifft, für die sich bereits ein Seitenvorschlüssel in dem Zwischenspeicher 38 befindet. Ist dies der Fall, ist die Seitenwechselfeststellungseinrichtung 32 in der Lage, anhand der dort gespeicherten Seitenadresse auf den Zwischenspeicher 38 zuzugreifen, welcher daraufhin den zwischengespeicherten Seitenvorschlüssel für die durch die Seitenadresse angegebene Seite an einen Seitenvorschlüsseleingang der Einrichtung 36 weiterleitet.

Stellt die Seitenwechselfeststellungseinrichtung 32 fest, dass für die durch die Seitenadresse angezeigte Seite noch kein Seitenvorschlüssel vorliegt, gibt dieselbe die Seitenadresse an einen Seitenadresseingang der Vorschlüsselberechnungseinrichtung 34 weiter. Die Vorschlüsselberechnungseinrichtung 34 berechnet aus der Seitenadresse einen Seitenvorschlüssel für diese Seite und gibt den berechneten Seitenvorschlüssel an den Seitenvorschlüsseleingang der Einrichtung 36 weiter. Ferner gibt sie denselben unter Verdrängung eines bereits gespeicherten Seitenvorschlüssels zur vorübergehenden Speicherung an den Speicher 38 aus.

Der Wortadressteil 30b der auf dem Adressbus 20 vorliegenden eindeutigen Adresse 30 wird an einen Wortadresseingang der Einrichtung 36 zur Ermittlung des individuellen Schlüssels weitergeleitet. Die Einrichtung 36 ermittelt aus eingegangener Wortadresse bzw. eingegangenem Versatzwert und eingegangenem Seitenvorschlüssel einen wortindividuellen Schlüssel für das Wort, auf die die eindeutige Adresse 30 zeigt. Die Einrichtung 36 gibt diesen wortindividuellen Schlüssel an ihrem Ausgang aus, der gleichzeitig auch den Ausgang der Schlüsselerzeugungseinrichtung 18 darstellt, der, wie in Fig. 1 gezeigt, mit dem Schlüsseleingang der Ver-/Entschlüsselungseinrichtung 16 verbunden ist.

Nachdem im Vorhergehenden der Aufbau sowie die Funktionsweise der einzelnen Komponenten der Schlüsselerzeugungseinrichtung 18 beschrieben worden ist, wird im Folgenden die Funktionsweise beschrieben. Zu diesem Zweck wird zunächst davon ausgegangen, dass noch zu keiner Seite 12a des Speichers 12 ein Seitenvorschlüssel erzeugt worden ist, also auch noch keiner im Speicher 38 gespeichert ist.

Bei Eingang einer eindeutigen Adresse 30 schlägt die Seitenwechselfeststellungseinrichtung 32 zunächst im Speicher 38 nach, ob für die in dem Seitenadressteil 30a enthaltene Seitenadresse der Seite, in der sich das Wort befindet, auf die die eindeutige Adresse 30 zeigt, wie es durch einen Pfeil 40 angedeutet ist, ein Seitenvorschlüssel vorhanden ist. Das Nachschlagen findet unter Verwendung der Seitenadresse als Index statt, wobei in dem Speicher 38 eine Tabelle von Seitenadress/Seitenvorschlüssel-Paaren bereitgestellt ist. Der Speicher 38 ist somit ein inhaltsadressierbarer Speicher, der für ankommende Seitenadressen nachschlägt, ob er ein Seitenadress/Seitenvorschlüssel-Paar mit dieser Seitenadresse hat und den entsprechenden Schlüssel ausgibt, falls dies der Fall ist. Dies soll jedoch vorliegend gemäß obiger Annahme zunächst nicht der Fall sein. Der Speicher 38 teilt den Fehlschlag (miss) folglich der Seitenwechselfeststellungseinrichtung 32 mit, die ihrerseits wiederum die Seitenadresse an die Vorschlüsselberechnungseinrichtung 34 weiterleitet.

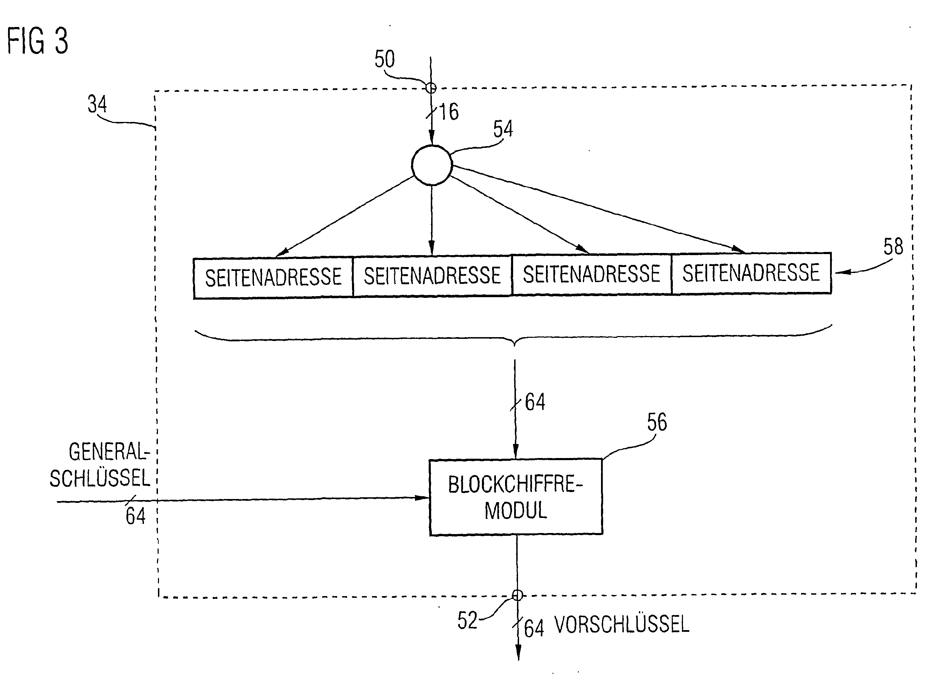

Die Vorschlüsselberechnungseinrichtung 34 berechnet auf der Basis der Seitenadresse einen Seitenvorschlüssel. Diese Berechnung umfasst gemäß dem bezugnehmend auf Fig. 3 näher beschriebenen Ausführungsbeispiel wie die Verschlüsselungsberechnungseinrichtung 34 beispielsweise eine Verschlüsselung der Seitenadresse unter Verwendung eines Generalschlüssels, so dass die Korrelation zwischen Seitenvorschlüsseln, die die Vorschlüsselberechnungseinrichtung 34 aus den Seitenadressen berechnet, zu den Seitenadressen möglichst kompliziert ist. Die Vorschlüsselberechnungseinrichtung 34 kann beispielsweise ganz allgemein die Seitenadresse an ihrem Seitenadresseingang gemäß einer nichtlinearen Abbildung auf die Seitenvorschlüssel abbilden. Diese nichtlineare Abbildung kann jedweder Abbildung der 16-Bit-Seitenadresse auf einen M-Bit-Seitenvorschlüssel sein, wobei m $\geq$ 16 sein muss, damit wirklich für jede Seite ein unterschiedlicher Seitenvorschlüssel generiert wird, m aber auch kleiner 16 sein kann, wenn dies nicht erforderlich ist. Die Vorschlüsselberechnungseinrichtung 34 kann auch eine Einwegfunktion oder eine asymmetrische Verschlüsselung verwenden, um die Seitenadresse auf den Seitenvorschlüssel abzubilden.

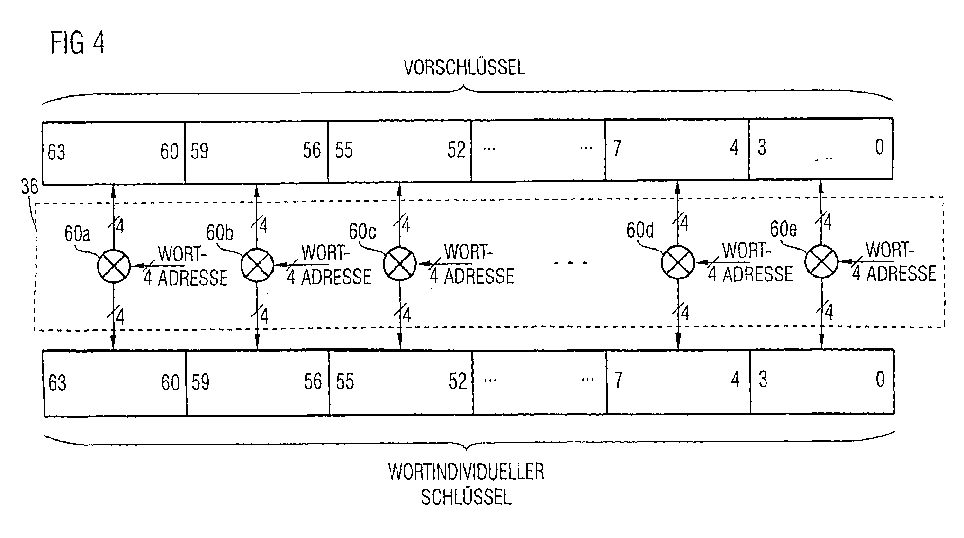

Der den Versatzwert enthaltende Wortadressteil 30b der auf dem Datenbus 20 vorliegenden eindeutigen Adresse 30 und der soeben von der Vorschlüsselberechnungseinrichtung 34 berechnete Seitenvorschlüssel wird von der Einrichtung 36 dazu verwendet, den wortindividuellen Schlüssel zu berechnen. Wie es später bezugnehmend auf die Fig. 4 - 7 noch näher erläutert werden wird, kann die Einrichtung zur Ermittlung des individuellen Schlüssels 36 beispielsweise den Versatzwert bzw. die Wortadresse an ihren Wortadresseingang dazu verwenden, den Seitenvorschlüssel zu modifizieren, und zwar unter Verwendung einfacher Rechenoperationen, wie z.B. XOR- oder NXOR-Operationen oder dergleichen. Vorzugsweise sollten die Rechenoperationen, die die Einrichtung 36 zur Ermittlung des individuellen Schlüssels verwendet, geringer an Zahl und weniger zeitaufwendig sein als die Vorschlüsselberechnungseinrichtung 34 zur Berechnung des Seitenvorschlüssels verwendet. Ferner wird es bevorzugt, dass die Einrichtung 36 zur Ermittlung des individuellen Schlüssels mit weniger Chipfläche implementiert ist und/oder die Implementierung der Einrichtung 36 zur Ermittlung des individuellen Schlüssels eine geringere Berechnungszeitdauer aufweist als die Vorschlüsselberechnungseinrichtung 34.

Der wortindividuelle Schlüssel, wie er von der Einrichtung 36 ermittelt worden ist, wird dann an die Ver-/Entschlüsselungseinrichtung 16 weitergeleitet.

Um nun zu verhindern, dass für jede eindeutige Adresse 30, die auf dem Adressbus 20 ausgegeben wird, die komplizierte Vorschlüsselberechnung erneut durchgeführt werden muss, speichert die Vorschlüsselberechnungseinrichtung 34 bei jeder Berechnung den soeben berechneten Seitenvorschlüssel in dem Zwischenspeicher 38. Der Zwischenspeicher 38 wird beispielsweise nach dem FIFO-Prinzip (FIFO = zuerst hinein zuerst hinaus) verwaltet, so dass bei Speicherung eines neuen Seitenvorschlüssels durch die Vorschlüsselberechnungseinrichtung 34 derjenige Seitenvorschlüssel verdrängt bzw. überschrieben wird, der zuerst hineingeschrieben worden ist. Freilich sind auch andere Aktualisierungs- bzw. Verdrängungsprinzipien anwendbar, wie z.B. das LRU- (Least Recently Used) Prinzip, bei dem der Seitenvorschlüssel ausgelagert wird, auf den die längste Zeit nicht mehr durch die Seitenwechselfeststellungseinrichtung 32 zugegriffen worden ist, oder das LFU- (Least Frequently Used) Prinzip, bei dem der Seitenvorschlüssel ausgelagert wird, der die geringste Anzahl von Zugriffen durch die Seitenwechselfeststellungseinrichtung 32 aufweist.

Wenn nun eine folgende eindeutige Adresse 30, die auf dem Adressbus 20 danach ausgegeben wird, einen Seitenadressteil 30a aufweist, in der eine Seitenadresse enthalten ist, die eine Seite anzeigt, für die in dem Zwischenspeicher 38 noch ein Seitenvorschlüssel zwischengespeichert ist, zeigt dies der Speicher 38 der Seitenwechselfeststellungseinrichtung 32 auf Erhalt der Seitenadresse als Index hin durch ein Treffer-(hit) Signal an. Die Seitenwechselfeststellungseinrichtung 32 leitet die Seitenadresse hierauf nicht an den Seitenadresseingang der Verschlüsselungsberechnungseinrichtung 34 weiter, sondern unter Umgehung der letztgenannten wird der der interessierenden Seitenadresse zugeordnete und bereits früher berechnete Seitenvorschlüssel von dem Speicher 38 an den Seitenvorschlüsseleingang der Einrichtung 36 ausgegeben. Aufgrund der Umgehung der Vorschlüsselberechnungseinrichtung 34 im Fall eines Treffers muss in diesem Fall also keine komplizierte und zeitraubende Vorschlüsselberechnung durchgeführt werden. Lediglich ein Nachschlagvorgang in dem Zwischenspeicher 38 ist notwendig, um den Seitenvorschlüssel für die neue eindeutige Adresse 30 auf dem Adressbus 20 zu ermitteln. Hierbei können zwischen der eindeutigen Adresse 30, auf deren Ausgabe auf dem Adressbus 20 hin der Seitenvorschlüssel tatsächlich durch die Vorschlüsselberechnungseinrichtung 34 berechnet und in den Zwischenspeicher 38 eingetragen worden ist, und der eindeutigen Adresse 30, auf welche hin der Seitenvorschlüssel aus dem Speicher 38 abgerufen wird, auf dem Adressbus 20 zwischenzeitlich schon eine oder mehr eindeutige Adressen 30 ausgegeben worden sein. Das bedeutet, dass bei geeigneter, an die jeweilige Anwendung des Systems von Fig. 1 angepasster Verdrängungsstrategie des Speichers 38 eventuell über lange Zeitdauern hinweg bzw. über mehrere eindeutige Adressen 30 auf dem Adressbus 20 hinweg, keine Vorschlüsselberechnung durchgeführt werden muss. Lediglich die unkomplizierte Modifizierung des von dem Zwischenspeicher 38 abgerufenen Seitenvorschlüssels durch die Wortadresse bzw. den Versatzwert in der Einrichtung 36 muss durchgeführt werden, um zu dem wortindividuellen Schlüssel für das Wort zu gelangen, dem die eindeutige Adresse 30 auf dem Adressbus 20 zugeordnet ist.

Der Zwischenspeicher 38 kann in einem der CPU 10 zugeordneten Cash-Speicher (nicht gezeigt in Fig. 1) zu einem erweiterten Cache integriert sein. Die Cache enthielte dann beispielsweise für einen schnelleren Datenzugriff die Inhalte kürzlich verwendeter Seiten, d.h. Seiten auf die kürzlich zugegriffen wurde. Die Inhalte wären dann verschlüsselt gespeichert. Zu jedem Seiteninhalt wäre in dem Cache die zugehörige Seitenadresse und der Seitenvorschlüssel gespeichert. Dieser erweiterte Cache enthielte also eine Tabelle von Triplets aus Seitenadresse, Seitenvorschlüssel und Seitenchiffrat. Die Verdrängungsstrategie dieses erweiterten Caches könnte eine der vorhergehenden genannten sein. In dem Fall eines Fehlschlags wäre die Funktionsweise die gleiche, wie oben beschrieben, mit dem Unterschied, dass nun auch der verschlüsselte Inhalt der aktuellen Seite unter Verdrängung einer anderen Seite in dem Cache gespeichert wird. In dem Fall eines Treffers würde neben der Ausgabe des Seitenvorschlüssels an die Einrichtung 36 ferner die Ausgabe des verschlüsselten Worts, auf den die eindeutige Adresse 30 zeigt, aus dem Chiffrat der interessierenden Seite an den Dateneingang der Ver/ Entschlüsselungseinrichtung 16 (Fig. 1) ausgegebene werden, der mit dem Speicher 12 verbunden ist, wodurch der langsamere Zugriff auf den Speicher 12 umgangen würde. Freilich könnte der Cache-Speicher auch wortweise organisiert sein mit Tripeln aus Wortadresse, Wortchiffrat und Seitenvorschlüssel. In dem Fall eines Daten-Caches mit unverschlüsselten Daten wäre dieser in der Klartext-Domäne zwischen CPU und Vorrichtung 14 angeordnet (Fig. 1) und eine Kombination des Daten-Caches mit der Speicher 38 wäre unnötig. Ferner könnte aber anstelle des Cache-Speichers 38 auch ein einfacher Speicher für die Speicherung nur des zuletzt berechneten Seitenvorschlüssels verwendet werden, dessen Inhalt bei einem nachfolgenden Zugriffsvorgang ausgelesen und unter Umgehung der Einrichtung 34 verwendet wird, wenn die nächste Seitenadresse, auf den sich dieser Zugriffsvorgang bezieht, die selbe wie die ist, auf den sich der vorhergehende Speichervorgang bezog, bei dem der zuletzt berechnete Speichervorschlüssel berechnet und gespeichert wurde.

Bezugnehmend auf Fig. 3 wird nun im Folgenden ein Ausführungsbeispiel für die Vorschlüsselberechnungseinrichtung 34 beschrieben. Die Vorschlüsselberechnungseinrichtung 34 von Fig. 3 umfasst einen Seitenadresseingang 50 und einen Vorschlüsselausgang 52, sowie eine Expansionseinrichtung 54 und ein Blockchiffremodul 56. Ein Dateneingang der Expansionseinrichtung 54 ist mit dem Seitenadresseingang 50 verbunden, um die 16-Bit-Seitenadresse zu erhalten. Die Expansionseinrichtung 54 erzeugt auf Basis der 16-Bit-Seitenadresse einen 64-Bit-Datenblock 58, indem er jedes Bit der Seitenadresse auf vier Bitpositionen des 64-Bit-Datenblocks 58 verteilt. Genauer ausgedrückt, schreibt die Expansionseinrichtung 54 die Seitenadresse in die Bits 0 - 15, 16 - 31, 32 - 47 und 48 - 63 des 64-Bit-Datenblocks 58, wie es auch in Fig. 3 angedeutet ist. Den so gebildeten 64-Bit-Datenblock 58 gibt die Expansionseinrichtung 54 an einen Dateneingang des Blockchiffremoduls 56 aus. Das Blockchiffremodul 56 umfasst neben dem Dateneingang ferner einen Schlüsseleingang, an dem dieselbe einen 64-Bit-Generalschlüssel erhält. Der 64-Bit-Generalschlüssel ist fest und muss vor einem unautorisierten Zugriff durch Dritte durch geeignete Maßnahmen geschützt werden. Das Blockchiffremodul 56 bewirkt eine nichtlineare Abbildung, die von dem Generalschlüssel abhängt, und ist beispielsweise ein DES-Modul oder ein AES-Modul. Basierend auf dem Generalschlüssel chiffriert bzw. verschlüsselt das Blockchiffremodul 56 den 64-Bit-Datenblock 58, um einen verschlüsselten 64-Bit-Datenblock zu erhalten und diesen an den Datenausgang 52 auszugeben. Dieser verschlüsselte 64-Bit-Datenblock stellt gemäß diesem Ausführungsbeispiel den Seitenvorschlüssel dar, basierend auf welchem, wie in Fig. 2a beschrieben, die wortindividuellen Schlüssel der Wörter der zugehörigen Seite berechnet werden, auf die die Seitenadresse am Eingang 50 zeigt.

Bezugnehmend auf die folgenden Fig. 4 - 7 werden nun Ausführungsbeispiele für die Einrichtung 36 zur Ermittlung des individuellen Schlüssels aus dem Seitenvorschlüssel und der Wortadresse von Fig. 2a beschrieben.

Gemäß dem Ausführungsbeispiel von Fig. 4 wird die 4-Bit-Wortadresse durch XOR-Operationen mehrmals auf den Seitenschlüssel aufaddiert. Hierzu umfasst die Einrichtung 36 16 4-Bit-XOR-Verknüpfungseinrichtungen 60a, 60b, 60c, 60d und 60e. Jede XOR-Verknüpfungseinrichtung umfasst zwei 4-Bit-Dateneingänge und einen 4-Bit-Datenausgang. An dem ersten der beiden 4-Bit-Dateneingänge empfangen die XOR-Verknüpfungseinrichtungen 60a - 60e die 4-Bit-Wortadresse. An den zweiten Dateneingängen empfangen die XOR- Verknüpfungseinrichtungen 60a - 60e unterschiedliche vier Bits des 64-Bit-Vorschlüssels, der beispielsweise auf die in Fig. 3 gezeigte Weise erzeugt worden ist. Genauer ausgedrückt, empfängt jede XOR-Verknüpfungseinrichtung 60a - 60e unterschiedliche vier aufeinanderfolgende Bits des Seitenvorschlüssels, nämlich die XOR-Verknüpfungseinrichtung 60a die Bits der Bitpositionen 63 - 60, die XOR-Verknüpfungseinrichtung 60b die Bits der Bitpositionen 59 - 56, die XOR-Verknüpfungseinrichtung 60c die Bits der Bitpositionen 55 ... 52 usw. des Vorschlüssels, wie es in Fig. 4 angezeigt ist. Die XOR-Verknüpfungseinrichtungen 60a - 60e verknüpfen bitweise die 4-Bit-Wortadresse mit den jeweiligen vier Bits aus dem 64-Bit-Vorschlüssel.

Gegeben sei beispielsweise der Seitenschlüssel als der Vektor $\overline{K}_{Seite} = (k_0\ k_1\ k_2 ... k_{62}\ k_{63})$, wobei $k_i$, für $i = 0 ... 63$, der Bitwert des Seitenvorschlüssels an der Bitposition i sei, und die Wortadresse durch den Vektor $(w_0\ w_1\ w_2\ w_3)$, wobei $w_j$ mit $j = 0 ... 3$ das Bit der Wortadresse an der Bitposition j sei. Die bitweisen XOR-Verknüpfungsergebnisse der XOR-Gatter 60a - 60i werden dann derart zu einem wortindividuellen Schlüssel mit 64 Bit zusammengefasst, dass sich der wortindividuelle Schlüssel zu einem Vektor $\overline{K}_{Wort}$ ergibt, mit $\overline{K}_{Wort} = (K_0 \oplus w_0 .\ k_1 \oplus w_1,\ k_2 \oplus w_2,\ k_3 \oplus w_3,\ k_4 \oplus w_0,\ k_5 \oplus w_1,\ k_6 \oplus w_2,\ k_7 \oplus w_3, ...,\ k_{60} \oplus w_0,\ k_{61} \oplus w_1,\ k_{62} \oplus w_2,\ k_{63} \oplus w_3)$, wobei $\oplus$ eine XOR-Verknüpfung anzeige.

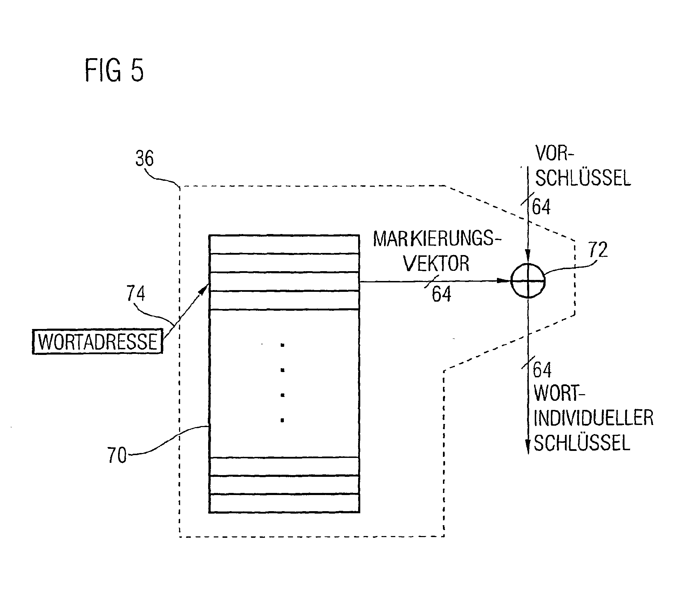

Gemäß dem Ausführungsbeispiel von Fig. 5 umfasst die Einrichtung 36 zur Ermittlung des individuellen Schlüssels eine Nachschlagtabelle 70, die für jede mögliche 4-Bit-Wortadresse einen unterschiedlichen 64-Bit-Maskierungsvektor bereitstellt, sowie eine 64-Bit-XOR-Verknüpfungseinrichtung 72. Gemäß diesem Ausführungsbeispiel wird mit der Wortadresse als Index durch eine mit 74 veranschaulichte Nachschlageinrichtung beispielsweise auf die Nachschlagtabelle 70 zugegriffen, um auf den Maskierungsvektor zuzugreifen, der der Wortadresse zugeordnet ist, die der Einrichtung 36 von dem Wortadressteil der aktuell auf dem Adressbus vorliegenden eindeutigen Adresse zugeführt wird. Die Nachschlagtabelle 70 gibt den indexierten Maskierungsvektor an einen ersten Dateneingang der XOR-Verknüpfungseinrichtung 72 aus. Ein zweiter 64-Bit-Dateneingang der XOR-Verknüpfungseinrichtung 72 erhält den 64-Bit-Seitenvorschlüssel. Ein 64-Bit-Datenausgang der XOR-Verknüpfungseinrichtung 72 stellt gleichzeitig den Ausgang der Einrichtung 36 von Fig. 5 dar. An diesem wird der wortindividuelle 64-Bit-Schlüssel ausgegeben.

Sei der Seitenvorschlüssel beispielsweise durch den bezugnehmend auf Fig. 4 definierten Vektor $\overline{K}_{Seite}$ gegeben, so gibt die XOR-Verknüpfungseinrichtung 72 an ihren Datenausgang $(k_0 \oplus m_0,\ k_1 \oplus m_1.... k_{63} \oplus m_{63})$ als wortindividuellen Schlüssel $\overline{K}_{Wort}$ aus, wenn der indexierte Maskierungsvektor $(m_0, m_1, ..., m_{63})$ ist. Anders ausgedrückt, wird gemäß dem Ausführungsbeispiel von Fig. 5 für jede Wortadresse ein Maskierungsvektor bereitgestellt, der die selbe Bitlänge wie der Seitenvorschlüssel aufweist, wobei über eine Nachschlagtabelle für die interessierende Wortadresse der ihr zugeordnete Maskierungsvektor angesteuert und dieser Maskierungsvektor dann auf den Seitenvorschlüssel durch bzw. per XOR-Verknüpfung aufaddiert wird, wobei das Ergebnis der wortindividuelle 64-Bit-Schlüssel ist.

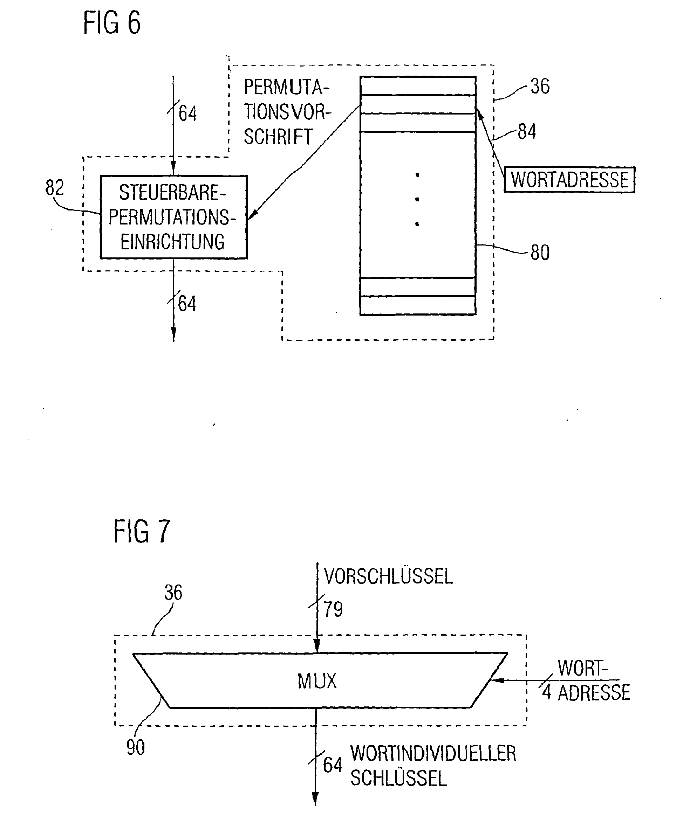

Gemäß dem Ausführungsbeispiel von Fig. 6 umfasst die Einrichtung 36 zur Ermittlung des wortindividuellen Schlüssels eine Nachschlagtabelle 80, in der vordefinierte unterschiedliche Permutationsvorschriften, nämlich eine unterschiedliche Permutationsvorschrift für jeden möglichen Wert, den die Wortadresse annehmen kann, und eine steuerbare Permutationseinrichtung 82. Mit dem der Einrichtung 36 zugeführten Wortadresse von dem Wortadressteil der aktuell auf dem Adressbus vorliegenden eindeutigen Adresse als Index greift ein mit 84 versinnbildlichte Nachschlageinrichtung auf die Nachschlagtabelle 80 zu, die daraufhin die dieser Wortadresse zugeordnete Permutationsvorschrift an die steuerbare Permutationseinrichtung 32 weiterleitet. Die Permutationsvorschriften, die in der Nachschlagtabelle 80 für jeden möglichen Wert der Wortadressen gespeichert sind, sind beispielsweise 64-Bit-Vektoren mit 6-Bit-Koeffizienten, wobei der erste Koeffizient angibt, an welcher Stelle gemäß der Permutationsvorschrift das niedrigstwertige Bit an dem 64-Bit-Dateneingang der steuerbaren Permutationseinrichtung 82 verschoben wird, der zweite Koeffizient angibt, wohin das nächste höherwertige Bit am 64-Bit-Dateneingang der steuerbaren Permutationseinrichtung 82 verschoben werden soll, usw. Der Dateneingang der steuerbaren Permutationseinrichtung 82 empfängt den Seitenvorschlüssel. Am 64-Bit-Datenausgang der steuerbaren Permutationseinrichtung 82 wird der wortindividuelle 64-Bit-Schlüssel ausgegeben, der sich gemäß der indexierten Permutationsvorschrift lediglich dadurch von dem Seitenvorschlüssel unterscheidet, dass die einzelnen Bits innerhalb der 64 Bitpositionen verschoben bzw. untereinander vertauscht sind.

Sei der Seitenvorschlüssel beispielsweise durch den bezugnehmend auf Fig. 4 definierten Vektor $\overline{K}_{Seite}$ gegeben, so gibt die Permutationseinrichtung 72 an ihren Datenausgang $(k_{P(0)}, k_{P(1)} ..., k_{P(63)})$ als wortindividuellen Schlüssel $K_{Wort}$ aus, wenn der ausgewählte Permutationsvektor $(P(0), P(1), ..., P(63))$ ist.

Anders ausgedrückt, steht gemäß dem Ausführungsbeispiel von Fig. 6 für jede Wortadresse eine bestimmte Permutation bereit. Zur Generierung des wortindividuellen Schlüssels aus dem Seitenvorschlüssel lässt man die der Wortadresse zugeordnete Permutation auf die Bits des Seitenvorschlüssels wirken, wobei das Ergebnis dann der wortindividuelle Schlüssel ist.

Im Bezug auf die vorhergehenden bezugnehmend auf die Fig. 4 -6 beschriebenen Ausführungsbeispiele für die Einrichtung 36 zur Ermittlung des wortindividuellen Schlüssels gilt, dass dieselben ohne weiteres mit dem Ausführungsbeispiel von Fig. 3 für die Vorschlüsselberechnungseinrichtung 34 kombinierbar sind, da dieselben als Seitenvorschlüssel einen 64-Bit-Seitenvorschlüssel erwarten bzw. verlangen. Wie aber bereits erwähnt, ist es ferner möglich, die Vorschlüsselberechnungseinrichtung 34 anders auszuführen. So könnte es möglich sein, dass die Vorschlüsselberechnungseinrichtung 34 einen 79-Bit-Seitenvorschlüssel erzeugt. Hiervon geht das Ausführungsbeispiel von Fig. 7 für die Einrichtung zur Ermittlung des individuellen Schlüssels aus. Gemäß diesem Ausführungsbeispiel besteht die Einrichtung 36 aus einem Multiplexer 90 mit einem 79-Bit-Dateneingang, einem 4-Bit-Steuereingang und einem 64-Bit-Datenausgang, wobei der Multiplexer 90 ausgebildet ist, um abhängig von der 4-Bit-Wortadresse an dem 4-Bit-Steuereingang 64 der 79 Bits des Seitenvorschlüssels an dem Dateneingang als 64-Bit-wortindividueller Schlüssel an den 64-Bit-Datenausgang auszugeben. Anders ausgedrückt, wird nach dem Ausführungsbeispiel von Fig. 7 ein etwas längerer Seitenvorschlüssel generiert als das für die Datenverschlüsselung eigentlich erforderlich ist. In Abhängigkeit von der Wortadresse wird dann ein bestimmtes Segment aus diesem langen Seitenschlüssel ausgewählt und als wortindividueller Schlüssel genutzt.

Der Multiplexer 90 kann beispielsweise derart ausgebildet sein, dass er den Seitenvorschlüssel $\overline{K}_{Seite}$ = $(k_0, k_1, k_2, ..., k_{77}, k_{78})$ abhängig von der Wortadresse W auf den wortindividuellen 64-Bit-Schlüssel $\overline{K}_{Wort}$= $(k_0, k_1, ..., k_{63})$ abbildet, wenn W=0000$_b$, auf $\overline{K}_{Wort}$ = $(k_1, k_2, ..., k_{64})$, wenn W=0001$_b$, auf $\overline{K}_{Wort}$ = $(k_2, k_3, ..., k_{65})$, wenn W=0010$_b$ ... und auf $\overline{K}_{Wort}$ = $(k_{15}, k_{16}, ..., k_{78})$, wenn W=1111$_b$.

Freilich sind auch andere Ausführungsbeispiele als die in Fig. 4 - 7 gezeigten für die Einrichtung 36 zur Ermittlung des wortindividuellen Schlüssels möglich. Die Einrichtung 36 könnte beispielsweise auch als eine kryptographische Einwegfunktion implementiert sein. Eine Einwegfunktion ist eine Funktion, bei der es wesentlich aufwendiger ist, die inverse Funktion zu ermitteln, oder bei der es unmöglich ist, dieselbe zu ermitteln. Ein Beispiel für eine Einwegfunktion ist beispielsweise eine modulare Operation, wie z.B. eine modulare Exponentation. Diese Einwegfunktion lässt man dann auf die jeweilige Wortadresse wirken. Der so entstehende Funktionswert mit dem Seitenvorschlüssel verknüpft ergibt den wortindividuellen Schlüssel.

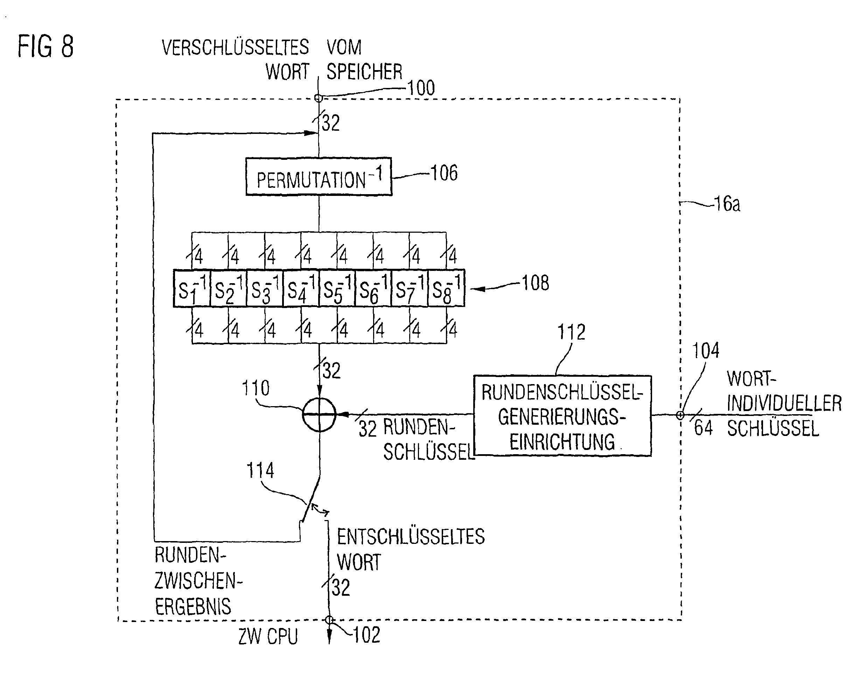

Nachdem sich die vorhergehenden Ausführungsbeispiele von Fig. 3 - 7 vornehmlich mit Ausführungsbeispielen für die Vorschlüsselberechnungseinrichtung 34 und die Ermittlungseinrichtung 36 beschäftigten, wird bezugnehmend auf Fig. 8 ein Ausführungsbeispiel für denjenigen Teil der Ver/Entschlüsselungseinrichtung 16 beschrieben, der für die Entschlüsselung der von dem Speicher 12 (oder von einem Cache in dem Fall eines Treffers) zu der CPU 10 gesandten verschlüsselten Wörter auf der Basis des wortindividuellen Schlüssels, wie er von der Schlüsselerzeugungseinrichtung 18 zugesendet wird, zuständig ist.

Der Entschlüsselungsteil von Fig. 8 ist allgemein mit 16a gezeigt. Er umfasst einen Dateneingang 100 zum Empfang des verschlüsselten, zu entschlüsselnden Wortes von dem Speicher 12 sowie einen Datenausgang 102 zur Ausgabe des entschlüsselten Wortes zur Weiterleitung an die CPU 10. Ferner umfasst der Entschlüsselungsteil 16a einen Schlüsseleingang 104 zum Empfang des wortindividuellen Schlüssels von der Schlüsselerzeugungseinrichtung 18 (Fig. 1). Als interne Komponenten umfasst der Empfangsteil 16a eine Permutationseinrichtung 106 zur Ausführung einer inversen Permutation, acht parallel geschaltete 4x4-S-Boxen $S_1^{-1} - S_8^{-1}$, , die parallel geschaltet sind und jeweils unterschiedliche vier Bits eines 64-Bit-Wertes gemäß einer nichtlinearen Abbildung auf vier unterschiedliche Bits eines Ausgangswertes abbilden, 108, eine 32-Bit-XOR-Verknüpfungseinrichtung 110, eine Rundenschlüsselgenerierungseinrichtung 112 und einen Schalter 114. Ein 32-Bit-Dateneingang der Permutationseinrichtung 106 ist mit dem Dateneingang 100 verbunden, um das verschlüsselte 32-Bit-Wort zu erhalten. Die Permutationseinrichtung 106 permutiert die Bits des 32-Bit-Wortes am Permutationseingang und gibt das permutierte 32-Bit-Wort an seinem Permutationsausgang aus, wobei die Permutation zu einer vorbestimmten Permutation P invers ist, was mit $P^{-1}$ angezeigt wird. Das Ergebnis der Permutation gibt dieselbe als 32-Bit-Wert an die parallel geschalteten S-Boxen 108 aus. Jede S-Box $S_1^{-1} - S_8^{-1}$ umfasst einen 4-Bit-Dateneingang und einen 4-Bit-Datenausgang. An jedem 4-Bit-Dateneingang der S-Boxen 108 liegen unterschiedliche vier Bits des 32-Bit-Wertes an, die von der Permutationseinrichtung 106 ausgegeben worden sind. Die S-Boxen 108 bilden, wie bereits erwähnt, durch eine nichtlineare Abbildung, die für jede der S-Boxen unterschiedlich sein kann und vorzugsweise auch ist, die vier Bitwerte an den Dateneingängen auf vier Bitwerte an den Datenausgängen ab. Die vier Bitwerte an den Datenausgängen werden wieder zu einem 32-Bit-Wort zusammengefasst und einem Dateneingang der XOR-Verknüpfungseinrichtung 110 zugeführt. Die XOR-Verknüpfungseinrichtung 110 umfasst einen weiteren Dateneingang. Dieser ist mit einem Ausgang der Rundenschlüsselgenerierungseinrichtung 112 verbunden, deren Eingang wiederum mit dem Schlüsseleingang 104 verbunden ist. Am Schlüsseleingang 104 liegt der wortindividuelle 64-Bit-Schlüssel an, wie er beispielsweise durch eine der Vorrichtungen von Fig. 4 - 7 erhalten worden ist oder durch eine andere mögliche Ausgestaltung der Schlüsselerzeugungseinrichtung 18. Die Rundenschlüsselgenerierungseinrichtung 112 erzeugt basierend auf dem wortindividuellen Schlüssel einen 32-Bit-Rundenschlüssel und gibt denselben an den zweiten Dateneingang der XOR-Verknüpfungseinrichtung 110 aus. Die XOR-Verknüpfungseinrichtung 110 verknüpft bitweise den 32-Bit-Rundenschlüssel und den 32-Bit-Ausgangswert von den S-Boxen 108, um an einem Datenausgang derselben ein 32-bit-Rundenzwischenergebnis zu erhalten. Ein Schaltereingang des Schalters 114 ist mit dem Datenausgang der XOR-Verknüpfungseinrichtung 110 verbunden. Der Schalter 114 umfasst zwei Schalterausgänge, nämlich einen 32-Bit-Rundenfortführungsschalterausgang und einen 32-Bit-Rundenbeendigungsschalterausgang. Der Schalter 114 verbindet den Dateneingang mit dem Rundenfortführungsschalterausgang, so dass das verschlüsselte Wort im Dateneingang 100 ein vorbestimmte Anzahl an Malen die Einrichtungen 106 - 110 durchlaufen hat. Anzahl ist hoch genug, um eine ausreichende Sicherheit der Verschlüsselung sicherzustellen. Der Rundenfortführungsschalterausgang ist mit dem Permutationseingang der Permutationseinrichtung 106 verbunden, während der Rundenbeendigungsschalterausgang mit dem Datenausgang 102 verbunden ist, um nach der vorbestimmten Anzahl von Runden, die das verschlüsselte Wort am Dateneingang 100 durchlaufen hat, das entschlüsselte 32-Bit-Wort am Datenausgang 102 auszugeben, der über den Datenbus 22 (Fig. 1) mit der CPU 10 verbunden ist. Die Rundenschlüsselgenerierungseinrichtung 112 ist derart ausgebildet, dass sie für jede Runde, die das verschlüsselte Wort die Einrichtungen 106 - 110 durchläuft, einen unterschiedlichen Rundenschlüssel aus dem wortindividuellen 64-Bit-Schlüssel am Dateneingang 104 erzeugt.

Nachdem im Vorhergehenden der Aufbau des Entschlüsselungsteils 16a beschrieben worden ist, wird im Folgenden kurz dessen Funktionsweise beschrieben. Das verschlüsselte 32-Bit-Wort, das von dem Speicher 12 ausgelesen worden ist, erreicht über den Dateneingang 100 die Permutationseinrichtung 106. Diese permutiert das verschlüsselte Wort im Hinblick auf die Anordnung bzw. Bitpositionsverteilung seiner Bits gemäß einer Permutationsvorschrift $P^{-1}$. Daraufhin sorgen die parallel geschalteten S-Boxen 108 für eine nichtlineare Abbildung des permutierten 32-Bit-Wertes auf einen permutierten, abgebildeten 32-Bit-Wert. Dieser wird mit einem ersten Rundenschlüssel, den die Rundenschlüsselgenerierungseinrichtung 112 für die erste Runde aus dem wortindividuellen Schlüssel erzeugt hat, in der XOR-Verknüpfungseinrichtung 110 bitweise XORverknüpft, wodurch das Rundenzwischenergebnis mit 32 Bits erhalten wird. Dieses 32-Bit-Wort leitet der Schalter 114, falls mehr als eine Runde durchgeführt werden soll, wieder an den Eingang der Permutationseinrichtung 106 weiter, wodurch die Permutation, die nichtlineare Abbildung sowie die XOR-Verknüpfung wiederholt werden, letztere jedoch mit einem neu ermittelten Rundenschlüssel. Nach der letzten Runde schaltet der Schalter 114 auf den Rundenbeendigungsschalterausgang und gibt das Rundenzwischenergebnis als entschlüsseltes 32-Bit-Wort aus.

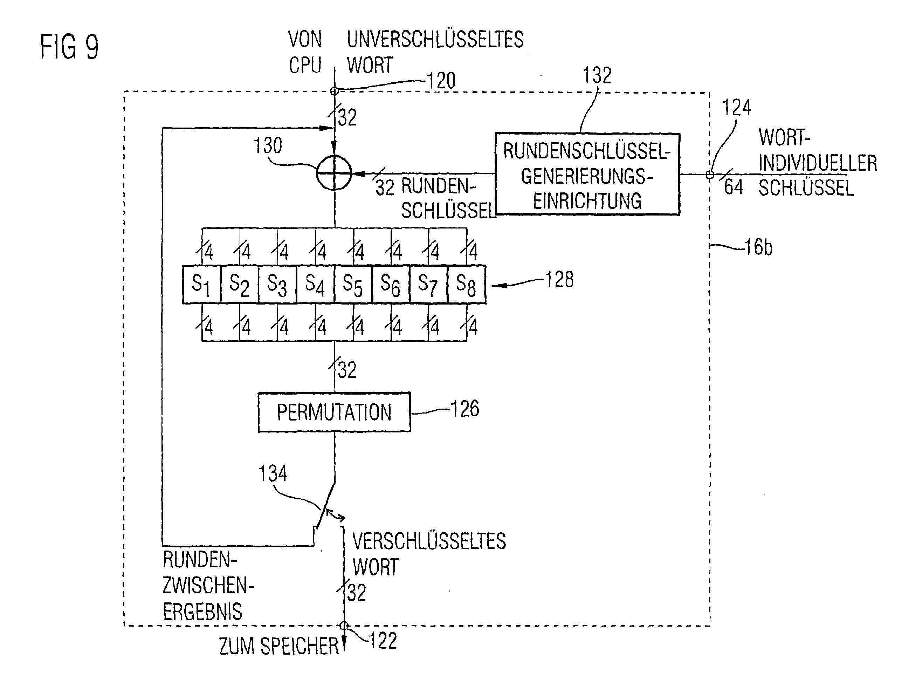

Der bezugnehmend auf Fig. 8 beschriebene Entschlüsselungsteil der Ver-/Entschlüsselungseinrichtung 16 wird immer dann aktiv, wenn die CPU verschlüsselte Speicherinhalte vom Speicher 12 lädt. Fig. 9 zeigt ein Ausführungsbeispiel für einen Verschlüsselungsteil 16b der Ver-/Entschlüsselungseinrichtung 16, der in der Lage ist, unverschlüsselte Wörter von der CPU 10 an den Speicher 12 bei einem Speichervorgang derart in verschlüsselte Wörter zu verschlüsseln, dass sie, wenn sie bei einem Ladevorgang wieder von der Ver-/Entschlüsselungseinrichtung 16 mittels des Entschlüsselungsteils 16a von Fig. 8 entschlüsselt werden, in ihrem ursprünglichen Zustand über den Datenbus 22 zur CPU 10 gelangen.

Der Verschlüsselungsteil 16b umfasst einen Dateneingang 120 zum Empfang eines unverschlüsselten, zu verschlüsselnden Wortes von der CPU 10 sowie einen Datenausgang 122 zur Ausgabe eines verschlüsselten Wortes zur Weiterleitung an den Speicher 12. Ferner umfasst der Verschlüsselungsteil 16b einen Schlüsseleingang 124 zum Empfang des wortindividuellen Schlüssels. Darüber hinaus umfasst der Verschlüsselungsteil 16b eine Permutationseinrichtung 126 zur Permutierung eines 32-Bit-Wertes an einem Permutationseingang gemäß einer Permutation P, die zu der Permutation invers ist, die durch die Permutationseinrichtung 106 durchgeführt wird, zu einem Permutationsergebnis an einem Permutationsausgang, acht parallel geschaltete 4x4-S-Boxen $S_1$ - $S_8$, 128, eine XOR-Verknüpfungseinrichtung 130, eine Rundengenerierungseinrichtung 132 und einen Schalter 134.

Die XOR-Verknüpfungseinrichtung 130 umfasst zwei 32-Bit-Dateneingänge, von denen der eine mit dem Dateneingang 120 der andere mit einem Datenausgang der Rundenschlüsselgenerierungseinrichtung 132 verbunden ist. Ein 32-Bit-Datenausgang der XOR-Verknüpfungseinrichtung 130 ist so mit den S-Boxen $S_1$ - $S_8$ verbunden, dass an den 4-Bit-Dateneingängen derselben jeweils vier unterschiedliche Bits des 32-Bit-Datenausgangs der XOR-Verknüpfungseinrichtung 130 anliegen. Die S-Boxen $S_1$ - $S_8$ bilden 4-Bit-Werte an ihren Dateneingängen gemäß nichtlinearen Abbildungen auf 4-Bit-Werte an ihren Datenausgängen ab, wobei die linearen Abbildungen zu denjenigen invers sind, die den S-Boxen von Fig. 8 bei 108 zugeordnet sind, d.h.

$$S_i \left( S_i^{-1} \left( x \right) \right) = S_i^{-1} \left( S_i \left( x \right) \right) = x \quad \text{für alle } i =$$

1 ... 8 und für alle 4-Bit-Werte x.

Die 4-Bit-Werte an den Datenausgängen der S-Boxen 128 werden als 32-Bit-Wert an den Permutationseingang der Permutationseinrichtung 126 weitergeleitet. Der Permutationsausgang der Permutationseinrichtung 126 ist mit einem Schaltereingang des Schalters 134 verbunden. Ein Rundenfortführungsschalterausgang des Schalters 134 ist mit dem ersten Dateneingang der XOR-Verknüpfungseinrichtung 130 verbunden, während ein Rundenbeendigungsschalterausgang des Schalters 134 mit dem Datenausgang 122 verbunden ist. Ein Eingang der Rundenschlüsselgenerierungseinrichtung 132 ist mit dem Schlüsseleingang 124 verbunden.

Nachdem im Vorhergehenden der Aufbau des Verschlüsselungsteils 16b beschrieben worden ist, wird im Folgenden dessen Funktionsweise beschrieben. Der Verschlüsselungsteil 16b ist im wesentlichen invers zu dem Entschlüsselungsteil 16a aufgebaut. Wenn ein unverschlüsseltes Wort am Dateneingang 120 zu der XOR-Verknüpfungseinrichtung 130 gelangt, verknüpft die XOR-Verknüpfungseinrichtung 130 dieses unverschlüsselte Wort mit einem Rundenschlüssel, den die Rundenschlüsselgenerierungseinrichtung 132 aus dem wortindividuellen Schlüssel erzeugt. Dieser Rundenschlüssel ist derjenige Rundenschlüssel, den der Entschlüsselungsteil 16a bei seiner letzten Runde verwenden wird, um das verschlüsselte Wort wieder zu entschlüsseln. Der sichergehende XOR-verknüpfte 32-Bit-Wert wird durch die S-Boxen 128 abgebildet auf einen abgebildeten 32-Bit-Wert. Diese Operation wird genau durch die S-Box-Abbildung der letzten Runde bei der Entschlüsselung in dem Entschlüsselungsteil 16a rückgängig gemacht werden. Der abgebildete 32-Bit-Wert wird von der Permutationseinrichtung 126 gemäß der Permutationsvorschrift P permutiert, um den permutierten 32-Bit-Wert zu erhalten, der das Rundenzwischenergebnis darstellt. Diese Permutation der ersten Runde bei der Verschlüsselung wird bei der Entschlüsselung in der letzten Runde durch die Permutation $P^{-1}$ in dem Entschlüsselungsteil 16a rückgängig gemacht werden. Solange weitere Runden erwünscht sind, verbindet der Schalter 134 den Schaltereingang mit dem Rundenfortführungsschalterausgang, ansonsten mit dem Rundenbeendigungsschalterausgang, um das 32-Bit-Rundenzwischenergebnis als das verschlüsselte Wort über den Datenausgang 122 an den Speicher 12 auszugeben. Die Rundenschlüssel, die die Rundenschlüsselgenerierungseinrichtung 132 aus dem wortindividuellen Schlüssel erzeugt, sind für die jeweiligen Runden unterschiedlich und sind den Runden genau umgekehrt zugeordnet verglichen zu den Rundenschlüsseln, die die Rundenschlüsselgenerierungseinrichtung 112 für die Entschlüsselungsrunden erzeugt. Auf diese Weise ist sichergestellt, dass ein verschlüsseltes Wort, wie es durch den Verschlüsselungsteil 16b erzeugt wird, durch den Entschlüsselungsteil 16a wieder zu einem entschlüsselten Wort mit dem ursprünglichen Wert entschlüsselt wird. Der wortindividuelle Schlüssel, der an den Schlüsseleingängen 104 bzw. 124 anliegt, ist bei Entschlüsselung und Verschlüsselung derselbe, da ja sowohl beim Lade- als auch Speicherzugriff dieselbe eindeutige Adresse für das jeweilige Wort auf dem Adressbus 20 (Fig. 1) ausgegeben wird, so dass die Schlüsselerzeugungseinrichtung 18 sowohl beim Laden als auch beim Speichern denselben wortindividuellen Schlüssel erzeugt.

Im Hinblick auf die Fig. 8 und 9 wird noch darauf hingewiesen, dass es freilich auch viele andere Möglichkeiten der Realisierung der Ver-/Entschlüsselung in der Ver-/Entschlüsselungseinrichtung 16 gibt. Unter anderem könnten Teile der Komponenten in der Entschlüsselungseinheit 16a auch in der Verschlüsselungseinheit 16b verwendet werden, wenn entsprechende Schalter je nach Ver- oder Entschlüsselung für eine geeignete Verschaltung dieser Komponenten sorgen. Ferner könnte Verschlüsselung und Entschlüsselung auch aus Doppelrunden bestehen, die eine Teilrunde mit einer S-Box-Abbildung und eine Teilrunde mit einer inversen $S^{-1}$-Box-Abbildung aufweisen, so dass alle Komponenten der Ver-/Entschlüsselungsvorrichtung sowohl beim Entschlüsseln als auch beim Verschlüsseln verwendet werden könnten.

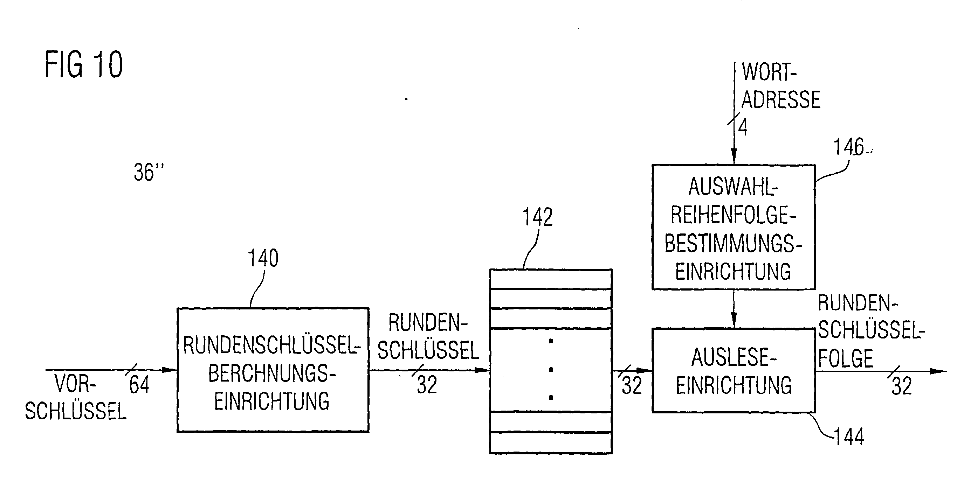

Die vorhergehenden Ausführungsbeispiele gingen davon aus, dass als wortindividueller Schlüssel ein 64-BitSchlüssel der Ver-/Entschlüsselungsvorrichtung zugeführt wird, die dann hierauf gemäß der Ausführungsbeispiele von Fig. 8 und 9 Rundenschlüssel erzeugt, die für die einzelnen Verschlüsselungs- bzw. Entschlüsselungsrunden verwendet werden. Das nachfolgend bezugnehmend auf Fig. 10 beschriebene Ausführungsbeispiel unterscheidet sich von diesen Ausführungsbeispielen dadurch, dass als wortindividueller Schlüssel eine Rundenschlüsselfolge der Ver-/Entschlüsselungseinrichtung zugeführt wird, die aus Rundenschlüsseln besteht, die für die Wörter einer Seite zwar gleich sind aber in unterschiedlicher Reihenfolge angeordnet sind.

Fig. 10 zeigt ein Ausführungsbeispiel für eine einen derartigen wortindividuellen Schlüssel erzeugende Einrichtung 36". Die Einrichtung 36" umfasst eine Rundenschlüsselberechnungseinrichtung 140, eine Nachschlagtabelle 142, eine Ausleseeinrichtung 144 und eine Auswahlreihenfolgebestimmungseinrichtung 146. Die Rundenschlüsselberechnungseinrichtung 140 umfasst einen Dateneingang und einen Datenausgang, wobei am Dateneingang der 64-Bit-Seitenvorschlüssel vorliegt, wie er entweder von der Vorschlüsselberechnungseinrichtung 34 oder dem Zwischenspeicher 38 zugeführt wird (siehe Fig. 2a). Die Rundenschlüsselberechnungseinrichtung 140 berechnet auf der Basis des Seitenvorschlüssels mehrere unterschiedliche Rundenschlüssel. Die Anzahl der Rundenschlüssel richtet sich nach der Anzahl der Runden der iterativen Blockchiffre, die durch die Ver-/Entschlüsselungseinrichtung 16 implementiert wird, wie z.B. durch den Entschlüsselungs- und Verschlüsselungsteil der Fig. 8 und 9. Für jede Runde trägt also die Rundenschlüsselberechnungseinrichtung 140 einen unterschiedlichen Rundenschlüssel in die Nachschlagtabelle 142 ein. Die Auswahlreihenfolgebestimmungseinrichtung 146 empfängt an einem Dateneingang die 4-Bit-Wortadresse der gerade auf dem Adressbus 20 befindlichen eindeutigen Adresse 30. Je nach Wortadresse wählt die Auswahlreihenfolgebestimmungseinrichtung 146 eine vorbestimmte unterschiedliche Reihenfolge bezüglich der Rundenschlüssel aus, mit der dieselben ausgelesen werden sollen. Diese Reihenfolge zeigt dieselbe der Ausleseeinrichtung 144 an, die daraufhin gemäß der angezeigten Reihenfolge die 32-Bit-Langen-Rundenschlüssel ausliest, um dieselben in der angezeigten Reihenfolge als Rundenschlüsselfolge von 32-Bit-Rundenschlüsseln an die Ver-/Entschlüsselungseinrichtung 16 auszugeben. Unterschiedliche Wörter mit unterschiedlichen Wortadressen in der selben Seite führen folglich auch bei selbem Wortinhalt zu einem unterschiedlichen Chiffrat, da bei der iterativen Blockchiffre in der Ver/Entschlüsselungseinrichtung 16 die Rundenschlüsselfolge bei den einzelnen Runden nicht dieselbe ist.

Anders ausgedrückt, wird gemäß dem Ausführungsbeispiel von Fig. 10 von einer iterativen Blockchiffre bei der Ver/Entschlüsselungseinrichtung 16 ausgegangen, bei welcher in jeder Runde ein eigener Rundenschlüssel angewandt wird. Diese Rundenschlüssel stehen in Registern der Nachschlagtabelle 142 bereit, nachdem sie vorab aus dem Seitenvorschlüssel berechnet worden sind. Die 4-Bit-Wortadresse bestimmt nun die Reihenfolge, in welcher die Rundenschlüssel bei der iterativen Blockchiffre angewendet werden.

Die im Vorhergehenden beschriebenen Ausführungsbeispiele zur Generierung von Schlüsseln für die Verschlüsselung zu speichernder Daten und/oder Entschlüsselung von gespeicherter, gelesener Daten beim Zugriff auf einen Speicher liefern folglich eine adressabhängige Bereichsschlüsselgenerierung. Anstatt jedoch die Bereichsschlüsselgenerierung für jedes Wort gleichermaßen kompliziert durchzuführen, wird der Prozess der Bereichsschlüsselgenerierung in zwei Teilprozesse aufgespalten, nämlich einen relativ aufwendigen und langsamen Schritt und einen einfachen und schnellen Schritt, der praktisch gratis ist. Nur der einfache Schritt muss für jedes einzelne Wort ausgeführt werden, der aufwendige Schritt dagegen nur einmal für mehrere Worte gleichzeitig.

Dabei ist das Festhalten an der adressabhängigen Bereichsschlüsselgenerierung mehr als nur sinnvoll: In einem Mikroprozessor beträgt die Wortgröße heutzutage einige wenige Byte. Zum Beispiel 4 Byte bzw. 32 Bit. Eine kryptographische 32-Bit-Blockchiffre macht aber keinen Sinn. Die Zahl 32 ist klein genug, so dass ein Unbefugter für alle möglichen $2^{32} \approx 4,3$ Milliarden Klartexte die zugehörigen Chiffretexte sammeln und in einer Art Codier-Lexikon auflisten könnte. Kryptographische Blockchiffre machen erst für Blockbreiten von 64 Bit, besser für 128 Bit, Sinn. Dieses Problem kann auch nicht durch Anwendung eines CBC-Modus, wie er in der Beschreibungseinleitung beschrieben worden ist, auf eine "32-Bit-Blockchiffre" gelöst werden. Die adressabhängige Bereichsschlüsselgenerierung löst dieses Problem dagegen befriedigend. Nun kann kein Codier-Lexikon obiger Art mehr erstellt werden. Denn das selbe 32-Bit-Klartext-Wort, das an zwei unterschiedlichen Speicheradressen vorkommt, wird mit verschiedenen Bereichsschlüsseln verschlüsselt. Damit werden die zugehörigen Chiffretexte ebenfalls verschieden sein, auch wenn der zugrundeliegende Klartext derselbe ist.

Die Bereichsschlüsselgenerierung zum Zugriff auf einen Speicher mit verschlüsseltem Inhalt gemäß obiger Ausführungsbeispiele bestand darin, aus dem geheimen Generalschlüssel und der Seitenadresse bzw. Pageadresse einen pageweit bzw. seitenweit gültigen Vorschlüssel zu generieren. Das ist der aufwendige Schritt, der nur einmal pro Page bzw. Seite durchgeführt werden muss. Dann wird aus dem Vorschlüssel und der Wortadresse auf einfache Weise ein wortindividueller Schlüssel hergeleitet. Die Verschlüsselung des Wortes erfolgt nun mit dem wortindividuellen Schlüssel.

Die sich ergebenden Vorteile sind die Folgenden: Die Berechnung des Pageschlüssels muss bestimmte kryptographische Kriterien erfüllen und ist entsprechend aufwendig. Der Pageschlüssel wird entweder in einer eigenen Hardwareeinheit berechnet oder es wird die Verschlüsselungseinheit 16 auch zur Berechnung des Pageschlüssels genutzt. Da nun die Berechnung des Pageschlüssels seltener erforderlich ist (nur einmal pro Page) kann aus diesem Grund die Hardwareeinheit für die Pageschlüsselgenerierung kleiner gestaltet werden. Im anderen Fall, bei dem die Verschlüsselungshardware zur Pageschlüsselgenerierung mitbenutzt wird, steigt in Folge der seltener gewordenen Beanspruchung der Verschlüsselungshardware die Verschlüsselungsrate.

**EP 1 668 515 B1**

Bezugnehmend auf obige Ausführungsbeispiele wird noch darauf hingewiesen, dass beispielsweise ohne weiteres die XOR-Gatter durch NXOR-Gatter ersetzt werden könnten. Die im vorhergehenden beschriebene vorübergehende Speicherung der Seitenvorschlüssel mit Verdrängungsstrategie kann auch durch eine Speicherung in einem ausreichend großen flüchtigen Speicher ohne Verdrängungsstrategie ersetzt werden, so dass die Seitenvorschlüssel bei fehlender Energiezufuhr automatisch gelöscht würden. Ferner könnte vor der Generierung des Seitenvorschlüssels die Seitenadresse auch anderen Operationen unterzogen werden als die Expansion von Fig. 3. Ferner muss die vorliegende Erfindung nicht basierend auf den kleinsten adressierbaren Einheiten des direkt adressierbaren Speichers arbeiten, sondern es können auch größere adressierbare Einheiten gewählt werden. Ferner könnte die Abbildung der Seitenadressen auf die Seitenvorschlüssel jegliche Abbildung sein, vorzugsweise natürlich eine nichtlineare Abbildung.

Insbesondere wird darauf hingewiesen, dass abhängig von den Gegebenheiten das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

Bezugszeichenliste

| 10 | CPU |
| 12 | Speicher |
| 12a | Seite |
| 12b | Wort |
| 14 | Zugriffssystem |
| 16 | Ver-/Entschlüsselungseinrichtung |
| 16a | Entschlüsselungsteil |
| 16b | Verschlüsselungsteil |
| 18 | Schlüsselerzeugungseinrichtung |
| 20 | Adressbus |
| 22 | Datenbus |
| 30 | eindeutige Adresse |
| 30a | Seitenadressteil |
| 30b | Wortadressteil |
| 32 | Seitenwechselfeststellungseinrichtung |
| 34 | Vorschlüsselberechnungseinrichtung |
| 36 | Einrichtung zur Ermittlung des individuellen Schlüssels |
| 38 | Zwischenspeicher |
| 40 | Verweis |
| 50 | Dateneingang |
| 52 | Datenausgang |
| 54 | Expansionseinrichtung |
| 56 | Blockchiffremodul |
| 58 | expandierter Datenblock |
| 60a-60e | XOR-Verknüpfungseinrichtungen |
| 70 | Nachschlagtabelle |
| 72 | XOR-Verknüpfungseinrichtung |
| 74 | Index |
| 80 | Nachschlagtabelle |
| 82 | steuerbare Permutationseinrichtung |
| 84 | Index |
| 90 | Multiplexer |
| 100 | Dateneingang |
| 102 | Datenausgang |
| 104 | Schlüsseleingang |
| 106 | Permutationseinrichtung |
| 108 | S-Boxen |
| 110 | XOR-Verknüpfungseinrichtung |
| 112 | Rundenschlüsselgenerierungseinrichtung |
| 114 | Schalter |
| 120 | Dateneingang |
| 122 | Datenausgang |
| 124 | Schlüsseleingang |
| 126 | Permutationseinrichtung |
| 128 | S-Boxen |
| 130 | XOR-Verknüpfungseinrichtung |
| 132 | Rundenschlüsselgenerierungseinrichtung |
| 134 | Schalter |
| 140 | Rundenschlüsselberechnungseinrichtung |
| 142 | Nachschlagtabelle |
| 144 | Ausleseeinrichtung |
| 146 | Auswahlreihenfolgebestimmungseinrichtung |

**Patentansprüche**

1. Vorrichtung zur Erzeugung eines individuellen Schlüssels zum Zugriff auf eine vorbestimmte adressierbare Einheit (12b) eines in adressierbaren Einheiten (12b) gegliederten Speichers (12), wobei die adressierbaren Einheiten (12b) gruppenweise zu Seiten (12a) zusammengefasst sind, wobei der vorbestimmten adressierbaren Einheit eine eindeutige Adresse (30) zugeordnet ist, die sich aus einer Seitenadresse (30a), die die Seite angibt, der die adressierbare Einheit angehört, und einer Einheitsadresse (30b), die die adressierbare Einheit unter den übrigen adressierbaren Einheiten, die der Seite angehören, identifiziert, zusammensetzt, mit folgenden Merkmalen:

einer Einrichtung (34) zum Berechnen eines Seitenvorschlüssels auf der Basis der Seitenadresse (30a);

einer Einrichtung (36) zum Ermitteln des individuellen Schlüssels auf der Basis des Seitenvorschlüssels und der Einheitsadresse (30b);

einer Einrichtung (38) zum temporären Speichern des berechneten Seitenvorschlüssels; **gekennzeichnet durch**

eine Einrichtung zum Überprüfen, ob bei einem nächsten Zugriff auf eine weitere vorbestimmte Einheit, der eine weitere eindeutige Adresse zugeordnet ist, in der Einrichtung zum temporären Speichern (38) ein bereits berechneter Seitenvorschlüssel existiert, der basierend auf einer Seitenadresse einer eindeutigen Adresse berechnet worden ist, die zu der Seitenadresse der weiteren eindeutigen Adresse identisch ist, und, falls dies der Fall ist, zum Weiterleiten, unter Umgehung der Einrichtung (34) zum Berechnen, des bereits berechneten Seitenvorschlüssels an die Einrichtung (36) zum Ermitteln und, falls dies nicht der Fall ist, zum Weiterleiten der Seitenadresse der weiteren eindeutigen Adresse an die Einrichtung (34) zum Berechnen.

2. Vorrichtung gemäß Anspruch 1, bei der die Einrichtung (34) zum Berechnen des Seitenvorschlüssels mehr Chipfläche und/oder mehr Verarbeitungslaufzeitdauer aufweist als die Einrichtung (36) zum Ermitteln des individuellen Schlüssels.

3. Vorrichtung gemäß Anspruch 1 oder 2, bei der die Einrichtung (34) zum Berechnen eine Einrichtung (56) zum Chiffrieren der Seitenadresse oder eines aus derselben hergeleiteten Datenblocks mit einem Generalschlüssel aufweist, um den Seitenvorschlüssel zu erhalten.

4. Vorrichtung gemäß Anspruch 3, bei der die Einrichtung (56) zum Chiffrieren eine Einrichtung (54) zum Expandieren der Seitenadresse (30a) aufweist, um einen expandierten Datenblock (58) zu erhalten, durch Abbilden jedes Bits der Seitenadresse (30a) auf zumindest ein unterschiedliches Bit des expandierten Datenblocks (58) und Abbilden zumindest eines Bits der Seitenadresse (30a) auf zumindest zwei Bits des expandierten Datenblocks (58), und bei der die Einrichtung zum Chiffrieren angepasst ist, um den expandierten Datenblock (58) zu chiffrieren.

5. Vorrichtung gemäß einem der Ansprüche 1 bis 4, bei der die Einrichtung (36) zum Ermitteln des individuellen Schlüssels eine Einrichtung (60a - 60e) zur bitweisen XOR-Verknüpfung von Bits der Einheitsadresse (30b) mit vorbestimmten Bits des Seitenvorschlüssels aufweist, um den individuellen Schlüssel zu erhalten.

6. Vorrichtung gemäß einem der Ansprüche 1 bis 4, bei der die Einrichtung (36) zum Ermitteln des individuellen Schlüssels ferner folgende Merkmale aufweist:

eine Nachschlagtabelle (70) mit Maskierungsvektoren, von denen jeder einer möglichen Einheitsadresse zugeordnet ist;
eine Einrichtung (74) zum Nachschlagen in der Nachschlagtabelle mit der Einheitsadresse als Index, um den zugeordneten Maskierungsvektor zu erhalten; und
eine Einrichtung (72) zur bitweisen XOR-Verknüpfung des Maskierungsvektors und des Seitenvorschlüssels, um den individuellen Schlüssel zu erhalten.

7. Vorrichtung gemäß einem der Ansprüche 1 bis 4, bei der die Einrichtung zum Ermitteln des individuellen Schlüssels eine steuerbare Permutationseinrichtung (82) zum Permutieren von Bits der Seitenadresse gemäß einer Permutationsvorschrift, die von der Einheitsadresse abhängt, um den individuellen Schlüssel zu erhalten, aufweist.

8. Vorrichtung gemäß einem der Ansprüche 1 bis 4, bei der die Einrichtung (36) zum Ermitteln des individuellen Schlüssels eine Auswahleinrichtung (90) zum Auswählen von Bits der Seitenadresse gemäß einer Auswahlvorschrift, die von der Einheitsadresse abhängt, um den individuellen Schlüssel zu erhalten, aufweist.

9. Vorrichtung gemäß einem der Ansprüche 1 bis 4, bei der die Einrichtung (36) zum Ermitteln des individuellen Schlüssels folgende Merkmale aufweist:

eine Einrichtung (140) zum Herleiten mehrerer Rundenschlüssel aus dem Seitenvorschlüssel; und
eine Einrichtung (144, 146) zum Definieren einer Reihenfolge unter den Rundenschlüsseln, um eine Folge der Rundenschlüssel zu erhalten, wobei die Reihenfolge von der Einheitsadresse abhängt, und die Folge den individuellen Schlüssel darstellt.

10. System zum Zugriff auf eine vorbestimmte adressierbare Einheit eines in adressierbaren Einheiten gegliederten Speichers (12), wobei die adressierbaren Einheiten (12b) gruppenweise zu Seiten (12a) zusammengefasst sind, wobei der vorbestimmten adressierbaren Einheit eine eindeutige Adresse (30) zugeordnet ist, die sich aus einer Seitenadresse (30a), die die Seite angibt, der die adressierbare Einheit angehört, und einer Einheitsadresse (30b), die die adressierbare Einheit unter den übrigen adressierbaren Einheiten, die der Seite angehören, identifiziert, zusammensetzt, mit folgenden Merkmalen:

einer Vorrichtung zur Erzeugung gemäß einem der Ansprüche 1 bis 9; und
einer Vorrichtung zum Entschlüsseln eines verschlüsselten Speicherinhalts in der vorbestimmten adressierbaren Einheit auf der Basis des individuellen Schlüssels.

11. System zum Zugriff auf eine vorbestimmte adressierbare Einheit eines in adressierbaren Einheiten gegliederten Speichers (12), wobei die adressierbaren Einheiten (12b) gruppenweise zu Seiten (12a) zusammengefasst sind, wobei der vorbestimmten adressierbaren Einheit eine eindeutige Adresse (30) zugeordnet ist, die sich aus einer Seitenadresse (30a), die die Seite angibt, der die adressierbare Einheit angehört, und einer Einheitsadresse (30b), die die adressierbare Einheit unter den übrigen adressierbaren Einheiten, die der Seite angehören, identifiziert, zusammensetzt, mit folgenden Merkmalen:

einer Vorrichtung zur Erzeugung gemäß einem der Ansprüche 1 bis 9; und
einer Vorrichtung zum Verschlüsseln zu speichernder Daten auf der Basis des individuellen Schlüssels und Schreiben der verschlüsselten, zu schreibenden Daten in die vorbestimmte adressierbare Einheit.

12. Verfahren zur Erzeugung eines individuellen Schlüssels zum Zugriff auf eine vorbestimmte adressierbare Einheit (12b) eines in adressierbaren Einheiten (12b) gegliederten Speichers (12), wobei die adressierbaren Einheiten (12b) gruppenweise zu Seiten (12a) zusammengefasst sind, wobei der vorbestimmten adressierbaren Einheit eine eindeutige Adresse (30) zugeordnet ist, die sich aus einer Seitenadresse (30a), die die Seite angibt, der die adressierbare Einheit angehört, und einer Einheitsadresse (30b), die die adressierbare Einheit unter den übrigen adressierbaren Einheiten, die der Seite angehören, identifiziert, zusammensetzt, mit folgenden Schritten:

Berechnen eines Seitenvorschlüssels auf der Basis der Seitenadresse (30a) in einer Einrichtung (34) zum Berechnen;
Ermitteln des individuellen Schlüssels auf der Basis des Seitenvorschlüssels und der Einheitsadresse (30b) in einer Einrichtung (36) zum Ermitteln;
temporäres Speichern des berechneten Seitenvorschlüssels in einer Einrichtung (38) zum temporären Speichern; und
Überprüfen, ob bei einem nächsten Zugriff auf eine weitere vorbestimmte Einheit, der eine weitere eindeutige Adresse zugeordnet ist, in dem temporären Speicher (38) ein bereits berechneter Seitenvorschlüssel existiert, der basierend auf einer Seitenadresse einer eindeutigen Adresse berechnet worden ist, die zu der Seitenadresse der weiteren eindeutigen Adresse identisch ist;
falls ein bereits berechneter Seitenvorschlüssel existiert, Weiterleiten, unter Umgehung der Einrichtung (34) zum Berechnen, des bereits berechneten Seitenvorschlüssels an die Einrichtung (36) zum Ermitteln; und
falls ein bereits berechneter Seitenvorschlüssel nicht existiert, Weiterleiten der Seitenadresse der weiteren eindeutigen Adresse an die Einrichtung (34) zum Berechnen.

13. Vorrichtung zur Erzeugung eines individuellen Schlüssels zum Zugriff auf eine vorbestimmte adressierbare Einheit (12b) eines in adressierbaren Einheiten (12b) gegliederten Speichers (12), wobei die adressierbaren Einheiten (12b) gruppenweise zu Seiten (12a) zusammengefasst sind, wobei der vorbestimmten adressierbaren Einheit eine eindeutige Adresse (30) zugeordnet ist, die sich aus einer Seitenadresse (30a), die die Seite angibt, der die adressierbare Einheit angehört, und einer Einheitsadresse (30b), die die adressierbare Einheit unter den übrigen adressierbaren Einheiten, die der Seite angehören, identifiziert, zusammensetzt, mit folgenden Merkmalen:

einer Einrichtung (34) zum Berechnen eines Seitenvorschlüssels auf der Basis der Seitenadresse (30a); und
einer Einrichtung (36) zum Ermitteln des individuellen Schlüssels auf der Basis des Seitenvorschlüssels und der Einheitsadresse (30b),

wobei die Einrichtung (36) zum Ermitteln des individuellen Schlüssels folgende Merkmale aufweist:

eine Einrichtung (140) zum Herleiten mehrerer Rundenschlüssel aus dem Seitenvorschlüssel; und
eine Einrichtung (144, 146) zum Definieren einer Reihenfolge unter den Rundenschlüsseln, um eine Folge der Rundenschlüssel zu erhalten, wobei die Reihenfolge von der Einheitsadresse abhängt, und die Folge den individuellen Schlüssel darstellt.

14. Verfahren zur Erzeugung eines individuellen Schlüssels zum Zugriff auf eine vorbestimmte adressierbare Einheit (12b) eines in adressierbaren Einheiten (12b) gegliederten Speichers (12), wobei die adressierbaren Einheiten (12b) gruppenweise zu Seiten (12a) zusammengefasst sind, wobei der vorbestimmten adressierbaren Einheit eine eindeutige Adresse (30) zugeordnet ist, die sich aus einer Seitenadresse (30a), die die Seite angibt, der die adressierbare Einheit angehört, und einer Einheitsadresse (30b), die die adressierbare Einheit unter den übrigen adressierbaren Einheiten, die der Seite angehören, identifiziert, zusammensetzt, mit folgenden Schritten:

Berechnen eines Seitenvorschlüssels auf der Basis der Seitenadresse (30a) in einer Einrichtung (34) zum Berechnen;
Ermitteln des individuellen Schlüssels auf der Basis des Seitenvorschlüssels und der Einheitsadresse (30b) in einer Einrichtung (36) zum Ermitteln,

wobei der Schritt des Ermittelns des individuellen Schlüssels folgende Teilschritte aufweist:

Herleiten mehrerer Rundenschlüssel aus dem Seitenvorschlüssel; und
Definieren einer Reihenfolge unter den Rundenschlüsseln, um eine Folge der Rundenschlüssel zu erhalten, wobei die Reihenfolge von der Einheitsadresse abhängt, und die Folge den individuellen Schlüssel darstellt.

## Claims

1. An apparatus for generating an individual key for accessing a predetermined addressable unit (12b) of a memory divided into addressable units (12b), wherein the addressable units (12b) are combined into pages (12a) in groups, wherein a unique address (30) is associated to the predetermined addressable unit, which is made up of a page address (30a) indicating the page to which the addressable unit belongs, and a unit address (30b) identifying the addressable unit among the other addressable units belonging to the page, comprising:

a means (34) for calculating a page pre-key based on the page address (30a);
a means (36) for determining the individual key based on the page pre-key and the unit address (30b);
a means (38) for temporarily storing the calculated page pre-key; **characterized by**
a means for checking whether during a next access to a further predetermined unit to which a further unique address is associated, an already calculated page pre-key exists in the means for temporarily storing (38), which has been calculated based on a page address of a unique address, which is identical to the page address of the further unique address, and, if this is the case,

transmitting the already calculated page pre-key to the means (36) for determining by bypassing the means (34) for calculating, and, if this is not the case, transmitting the page address of the further unique address to the means (34) for calculating.

2. The apparatus according to claim 1, wherein the means (34) for calculating the page pre-key comprises more chip area and/or more processing run time than the means (36) for determining the individual key.

3. The apparatus according to claim 1 or 2, wherein the means (34) for calculating comprises a means (56) for ciphering the page address or a data block derived from the same with a master key to obtain the page pre-key.

4. The apparatus according to claim 3, wherein the means (56) for ciphering comprises a means (54) for expanding the page address (30a) to obtain an expanded data block (58) by mapping every bit of the page address (30a) to at least one different bit of the expanded data block (58), and mapping at least one bit of the page address (30a) to at least two bits of the expanded data block (58), and wherein the means for ciphering is adapted to cipher the expanded data block (58).

5. The apparatus according to one of claims 1 to 4, wherein the means (36) for determining the individual key comprises a means (60a - 60e) for XORing bits of the unit address (30b) bit by bit with predetermined bits of the page pre-key to obtain the individual key.

6. The apparatus according to one of claims 1 to 4, wherein the means (36) for determining the individual key further comprises:

a look-up table (70) with masking vectors, each of them being associated to a possible unit address;
a means (74) for looking up in the look-up table with the unit address as index to obtain the associated masking vector; and
a means (72) for XORing the masking vector and the page pre-key bit by bit to obtain the individual key.

7. The apparatus according to one of claims 1 to 4, wherein the means for determining the individual key comprises a controllable permutation means (82) for permuting bits of the page address according to a permutation regulation depending on the unit address to obtain the individual key.

8. The apparatus according to one of claims 1 to 4, wherein the means (36) for determining the individual key comprises a selection means (90) for selecting bits of the page address according to a selection regulation depending on the unit address to obtain the individual key.

9. The apparatus according to one of claims 1 to 4, wherein the means (36) for determining the individual key comprises:

a means (140) for deriving several round keys from the page pre-key; and
a means (144, 146) for defining an order among the round keys to obtain a sequence of round keys, wherein the order depends on the unit address and the sequence represents the individual key.

10. A system for accessing a predetermined addressable unit of a memory (12) divided into addressable units, wherein the addressable units (12b) are combined into pages (12a) in groups, wherein a unique address (30) is associated to the predetermined addressable unit, which is made up of a page address (30a) indicating the page to which the addressable unit belongs, and a unit address (30b) identifying the addressable unit among the other addressable units belonging to the page, comprising:

an apparatus for generating according to one of claims 1 to 9; and
an apparatus for decrypting an encrypted memory content in the predetermined addressable unit based on the individual key.

11. A system for accessing a predetermined addressable unit of a memory (12) divided into addressable units, wherein the addressable units (12b) are combined into pages (12a) in groups, wherein a unique address (30) is associated to the predetermined addressable unit, which is made up of a page address (30a) indicating the page to which the addressable unit belongs, and a unit address (30b) identifying the addressable unit among the other addressable units belonging to the page, comprising:

an apparatus for generating according to one of claims 1 to 9; and
an apparatus for encrypting data to be stored based on the individual key and writing the encrypted data to be written into the predetermined addressable unit.

12. A method for generating an individual key for accessing a predetermined addressable unit (12b) of a memory (12) divided into addressable units, wherein the addressable units (12b) are combined into pages (12a) in groups, wherein a unique address (30) is associated to the predetermined addressable unit, which is made up of a page address (30a) indicating the page to which the addressable unit belongs, and a unit address (30b) identifying the addressable unit among the other addressable units belonging to the page, comprising:

calculating a page pre-key based on the page address (30a) in a means (34) for calculating;
determining the individual key based on the page pre-key and the unit address (30b) in a means (36) for determining;
temporarily storing the calculated page pre-key in a means (38) for temporarily storing; and
checking whether during a next access to a further predetermined unit to which a further unique address is associated, an already calculated page pre-key exists in the temporary memory (38), which has been calculated based on a page address of a unique address, which is identical to the page address of the further unique address;
if an already calculated page pre-key exists, transmitting the already calculated page pre-key to the means (36) for determining by bypassing the means (34) for calculating; and
if an already calculated page pre-key does not exist, transmitting the page address of the further unique address to the means (34) for calculating.

13. An apparatus for generating an individual key for accessing a predetermined addressable unit (12b) of a memory divided into addressable units (12b), wherein the addressable units (12b) are combined into pages (12a) in groups, wherein a unique address (30) is associated to the predetermined addressable unit, which is made up of a page address (30a) indicating the page to which the addressable unit belongs, and a unit address (30b) identifying the addressable unit among the other addressable units belonging to the page, comprising:

a means (34) for calculating a page pre-key based on the page address (30a); and
a means (36) for determining the individual key based on the page pre-key and the unit address (30b),
the means (36) for determining the individual key comprising:
a means (140) for deriving several round keys from the page pre-key; and
a means (144, 146) for defining an order among the round keys to obtain a sequence of round keys, wherein the order depends on the unit address and the sequence represents the individual key.

14. A method for generating an individual key for accessing a predetermined addressable unit (12b) of a memory divided into addressable units (12b), wherein the addressable units (12b) are combined into pages (12a) in groups, wherein a unique address (30) is associated to the predetermined addressable unit, which is made up of a page address (30a) indicating the page to which the addressable unit belongs, and a unit address (30b) identifying the addressable unit among the other addressable units belonging to the page, comprising the steps of:

> calculating a page pre-key based on the page address (30a) in a means (34) for calculating;
> determining the individual key based on the page pre-key and the unit address (30b) in a means (36) for determining,

wherein the step of determining the individual key comprises the following substeps:

> deriving several round keys from the page pre-key; and
> defining an order among the round keys to obtain a sequence of the round keys, wherein the order depends on the unique address and the sequence represents the individual key.

## Revendications

1. Dispositif pour générer une clé individuelle permettant d'accéder à une unité adressable (12b) prédéterminée d'une mémoire (12) divisée en unités adressables (12b), les unités adressables (12b) étant regroupées par groupe en pages (12a), à l'unité adressable prédéterminée étant associée une adresse univoque (30) qui se compose d'une adresse de page (30a), qui indique la page à laquelle appartient l'unité adressable, et d'une adresse d'unité (30b), qui identifie l'unité adressable parmi les unités adressables restantes appartenant à la page, aux caractéristiques suivantes:

> un moyen (34) destiné à calculer une préclé de page sur base de l'adresse de page (30a);
> un moyen (36) destiné à déterminer la clé individuelle sur base de la préclé de page et de l'adresse d'unité (30b);
> un moyen (38) destiné à mémoriser temporairement la préclé de page calculée;
> **caractérisé par**
> un moyen destiné à vérifier, lors d'un accès suivant à une autre unité prédéterminée à laquelle est associée une autre adresse univoque, s'il existe, dans le moyen destiné à mémoriser temporairement (38), une préclé de page déjà calculée qui a été calculée sur base d'une adresse de page d'une adresse univoque qui est identique à l'adresse de page de l'autre adresse univoque, et, si cela est le cas, à transmettre, en contournant le moyen (34) destiné à calculer, la préclé de page déjà calculée au moyen (36) destiné à déterminer et, si cela n'est pas le cas, à transmettre l'adresse de page de l'autre adresse univoque au moyen (34) destiné à calculer.

2. Dispositif selon la revendication 1, dans lequel le moyen (34) destiné à calculer la préclé de page présente plus de surface de puce et/ou plus de temps de traitement que le moyen (36) destiné à déterminer la clé individuelle.

3. Dispositif selon la revendication 1 ou 2, dans lequel le moyen (34) destiné à calculer présente un moyen (56) destiné à crypter l'adresse de page ou un bloc de données dérivé de cette dernière par une clé générale, pour obtenir la préclé de page.

4. Dispositif selon la revendication 3, dans lequel le moyen (56) destiné à crypter présente un moyen (54) destiné à étendre l'adresse de page (30a), pour obtenir un bloc de données étendu (58), par reproduction de chaque bit de l'adresse de page (30a) sur au moins un bit différent du bloc de données étendu (58) et reproduction d'au moins un bit de l'adresse de page (30a) sur au moins deux bits du bloc de données étendu (58), et dans lequel le moyen destiné à crypter est adapté pour crypter le bloc de données étendu (58).

5. Dispositif selon l'une des revendications 1 à 4, dans lequel le moyen (36) destiné à déterminer la clé individuelle présente un moyen (60a à 60e) destiné à coupler XOR par bit des bits de l'adresse d'unité (30b) avec des bits prédéterminés de la préclé de page, pour obtenir la clé individuelle.

6. Dispositif selon l'une des revendications 1 à 4, dans lequel le moyen (36) destiné à déterminer la clé individuelle présente par ailleurs les caractéristiques suivantes:

> un tableau de consultation (70) avec des vecteurs de masquage, chacun desquels est associé à une adresse d'unité possible;
> un dispositif (74) destiné à consulter le tableau de consultation avec l'adresse d'unité comme indice, pour obtenir le vecteur de masquage associé; et
> un moyen (72) destiné à coupler XOR par bit le vecteur de masquage et la préclé de page, pour obtenir la clé individuelle.

7. Dispositif selon l'une des revendications 1 à 4, dans lequel le moyen destiné à déterminer la clé individuelle présente un moyen de permutation réglable (82) destiné à permuter des bits de l'adresse de page selon une règle de permutation qui dépend de l'adresse d'unité, pour obtenir la clé individuelle.

8. Dispositif selon l'une des revendications 1 à 4, dans lequel le moyen (36) destiné à déterminer la clé individuelle présente un moyen de sélection (90) destiné à sélectionner des bits de l'adresse de page selon une règle de sélection qui dépend de l'adresse d'unité, pour obtenir la clé individuelle.

9. Dispositif selon l'une des revendications 1 à 4, dans lequel le moyen (36) destiné à déterminer la clé individuelle présente les caractéristiques suivantes:

    un moyen (140) destiné à dériver plusieurs clés de ronde à partir de la préclé de page; et
    un moyen (144, 146) destiné à définir un ordre parmi les clés de ronde, pour obtenir une succession de clés de ronde, l'ordre dépendant de l'adresse d'unité, et la succession représentant la clé individuelle.

10. Système permettant d'accéder à une unité adressable prédéterminée d'une mémoire (12) divisée en unités adressables, les unités adressables (12b) étant regroupées par groupe en pages (12a), à l'unité adressable prédéterminée étant associée une adresse univoque (30) qui se compose d'une adresse de page (30a), qui indique la page à laquelle appartient l'unité adressable, et d'une adresse d'unité (30b), qui identifie l'unité adressable parmi les unités adressables restantes appartenant à la page, aux caractéristiques suivantes:

    un dispositif destiné à générer selon l'une des revendications 1 à 9; et
    un dispositif destiné à décrypter un contenu de mémoire crypté dans l'unité adressable prédéterminée sur base de la clé individuelle.

11. Système permettant d'accéder à une unité adressable prédéterminée d'une mémoire (12) divisée en unités adressables, les unités adressables (12b) étant regroupées par groupe en pages (12a), à l'unité adressable prédéterminée étant associée une adresse univoque (30) qui se compose d'une adresse de page (30a), qui indique la page à laquelle appartient l'unité adressable, et d'une adresse d'unité (30b), qui identifie l'unité adressable parmi les unités adressables restantes appartenant à la page, aux caractéristiques suivantes:

    un dispositif destiné à générer selon l'une des revendications 1 à 9; et
    un dispositif destiné à crypter des données à mémoriser sur base de la clé individuelle et à écrire les données à écrire cryptées dans l'unité adressable prédéterminée.

12. Procédé pour générer une clé individuelle permettant d'accéder à une unité adressable (12b) prédéterminée d'une mémoire (12) divisée en unités adressables (12b), les unités adressables (12b) étant regroupées par groupe en pages (12a), à l'unité adressable prédéterminée étant associée une adresse univoque (30) qui se compose d'une adresse de page (30a), qui indique la page à laquelle appartient l'unité adressable, et d'une adresse d'unité (30b), qui identifie l'unité adressable parmi les unités adressables restantes appartenant à la page, aux étapes suivantes consistant à:

    calculer une préclé de page sur base de l'adresse de page (30a) dans un moyen (34) destiné à calculer;
    déterminer la clé individuelle sur base de la préclé de page et de l'adresse d'unité (30b) dans un moyen (36) destiné à déterminer;
    mémoriser temporairement la préclé de page calculée dans un moyen (38) destiné à mémoriser temporairement; et
    vérifier, lors d'un accès suivant à une autre unité prédéterminée à laquelle est associée une autre adresse univoque, s'il existe, dans la mémoire temporaire (38), une préclé de page déjà calculée qui a été calculée sur base d'une adresse de page d'une adresse univoque qui est identique à l'adresse de page de l'autre adresse univoque;
    s'il existe une préclé de page déjà calculée, transmettre, en contournant le moyen (34) destiné à calculer, la préclé de page déjà calculée au moyen (36) destiné à déterminer; et
    s'il n'existe pas de préclé de page déjà calculée, transmettre l'adresse de page de l'autre adresse univoque au moyen (34) destiné à calculer.

13. Dispositif pour générer une clé individuelle permettant d'accéder à une unité adressable (12b) prédéterminée d'une mémoire (12) divisée en unités adressables (12b), les unités adressables (12b) étant regroupées par groupe en pages (12a), à l'unité adressable prédéterminée étant associée une adresse univoque (30) qui se compose d'une adresse de page (30a), qui indique la page à laquelle appartient l'unité adressable, et d'une adresse d'unité (30b), qui identifie l'unité adressable parmi les unités adressables restantes appartenant à la page, aux caractéristiques suivantes:

    un moyen (34) destiné à calculer une préclé de page sur base de l'adresse de page (30a);
    un moyen (36) destiné à déterminer la clé individuelle sur base de la préclé de page et de l'adresse d'unité (30b);
le moyen (36) destiné à déterminer la clé individuelle présentant les caractéristiques suivantes:
un moyen (140) destiné à dériver plusieurs clés de ronde à partir de la préclé de page; et
un moyen (144, 146) destiné à définir un ordre parmi les clés de ronde, pour obtenir une succession de clés de ronde, l'ordre dépendant de l'adresse d'unité, et la succession représentant la clé individuelle.

14. Procédé pour générer une clé individuelle permettant d'accéder à une unité adressable (12b) prédéterminée d'une mémoire (12) divisée en unités adressables (12b), les unités adressables (12b) étant regroupées par groupe en pages (12a), à l'unité adressable prédéterminée étant associée une adresse univoque (30) qui se compose d'une adresse de page (30a), qui indique la page à laquelle appartient l'unité adressable, et d'une adresse d'unité (30b), qui identifie l'unité adressable parmi les unités adressables restantes appartenant à la page, aux étapes suivantes consistant à:

   calculer une préclé de page sur base de l'adresse de page (30a) dans un moyen (34) destiné à calculer;
   déterminer la clé individuelle sur base de la préclé de page et de l'adresse d'unité (30b) dans un moyen (36) destiné à déterminer,
   l'étape consistant à déterminer la clé individuelle présentant les étapes partielles suivantes consistant à:
   dériver plusieurs clés de ronde à partir de la préclé de page; et
   définir un ordre parmi les clés de ronde, pour obtenir une succession de clés de ronde, l'ordre dépendant de l'adresse d'unité, et la succession représentant la clé individuelle.

## FIG 1

WORTINDIVIDUELLER
SCHLÜSSEL

16

VER/ENT-
SCHLÜSSELUNGS-
EINRICHTUNG

10    22

CPU

DATENBUS

ADRESSBUS

20

14

18

SCHLÜSSEL-
ERZEUGUNGS-
EINRICHTUNG

12

SPEICHER

## FIG 2B

WORTADRESSE/
VERSATZWERT

| 0000<br>WORT_0 | 0001<br>WORT_1 | 0010<br>WORT_2 | 0011<br>WORT_3 |
|---|---|---|---|
| 0100<br>WORT_4 | 0101<br>WORT_5 | 0110<br>WORT_6 | 0111<br>WORT_7 |
| 1000<br>WORT_8 | 1001<br>WORT_9 | 1010<br>WORT_10 | 1011<br>WORT_11 |
| 1100<br>WORT_12 | 1101<br>WORT_13 | 1110<br>WORT_14 | 1111<br>WORT_15 |

12b

WORT-
NUMMER

12a

FIG 2A

12b

12

12a

40

30a          EINDEUTIGE ADRESSE          30b

30

SEITENADRESSTEIL     WORTADRESSTEIL
SEITENADRESSE        WORTADRESSE

32
ÄNDERUNG

18

VORSCHLÜSSEL-
BERECHNUNGS-
EINRICHTUNG          34

SEITENVOR-
SCHLÜSSEL

38

EINRICHTUNG ZUR
ERMITTLUNG DES       36
INDIVIDUELLEN
SCHLÜSSELS

WORT-
INDIVIDUELLER
SCHLÜSSEL

FIG 3

EP 1 668 515 B1

FIG 4

FIG 5

## FIG 6

PERMUTA-
TIONSVOR-
SCHRIFT

64

82

STEUERBARE-
PERMUTATIONS-
EINRICHTUNG

64

36

84

WORTADRESSE

80

## FIG 7

VORSCHLÜSSEL

36

79

MUX

WORT-
ADRESSE

90

64 WORTINDIVIDUELLER
SCHLÜSSEL

FIG 8

VERSCHLÜSSELTES VOM
WORT SPEICHER 100

PERMUTATION$^{-1}$ — 106

$S_1^{-1}$ $S_2^{-1}$ $S_3^{-1}$ $S_4^{-1}$ $S_5^{-1}$ $S_6^{-1}$ $S_7^{-1}$ $S_8^{-1}$ — 108

112

RUNDENSCHLÜSSEL-
GENERIERUNGS-
EINRICHTUNG

104

WORT-
INDIVIDUELLER
SCHLÜSSEL

110

RUNDEN-
SCHLÜSSEL

114

RUNDEN-
ZWISCHEN-
ERGEBNIS

ENTSCHLÜSSELTES
WORT

ZW CPU 102

16a

EP 1 668 515 B1

FIG 9

VON UNVERSCHLÜSSELTES
CPU WORT ─120

132

RUNDENSCHLÜSSEL-
GENERIERUNGS-
EINRICHTUNG

130

32 RUNDEN-
SCHLÜSSEL

124

WORT-
INDIVIDUELLER
64 SCHLÜSSEL

─16b

/4 /4 /4 /4 /4 /4 /4 /4

| $S_1$ | $S_2$ | $S_3$ | $S_4$ | $S_5$ | $S_6$ | $S_7$ | $S_8$ | ─128 |

/4 /4 /4 /4 /4 /4 /4 /4

/32

PERMUTATION ─126

134

VERSCHLÜSSELTES
WORT

RUNDEN-
ZWISCHEN-
ERGEBNIS

/32

ZUM SPEICHER ─122

EP 1 668 515 B1

FIG 10

WORT-
ADRESSE
$/4$

36''

146

AUSWAHL-
REIHENFOLGE-
BESTIMMUNGS-
EINRICHTUNG

140

142

RUNDEN-
SCHLÜSSEL

RUNDENSCHLÜSSEL-
BERCHNUNGS-
EINRICHTUNG

RUNDEN-
SCHLÜSSEL-
FOLGE

VOR-
SCHLÜSSEL   $/64$

$/32$

$/32$

AUSLESE-
EINRICHTUNG

$/32$

144

EP 1 668 515 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5915025 A

**In der Beschreibung aufgeführte Nicht-Patentliteratur**

- Handbook of Applied Cryptography. CRC Press, 1997, 230